# EUROPEAN PATENT APPLICATION

(11) **EP 4 574 419 A1**
(43) Date of publication of application: **25.06.2025**
(21) Application number: 24221920.2
(22) Date of filing: 19.12.2024
(51) Int. Cl.: B32B 7/12, B32B 27/08, B32B 27/10, B32B 27/32, B65D 5/06, B65D 8/00, B65D 75/48

(54) **LAMINATED PACKAGING MATERIAL COMPRISING A BARRIER-COATED CELLULOSE-BASED SUBSTRATE, ITS METHOD FOR MANUFACTURING AND PACKAGING CONTAINER**

(30) Priority: 21.12.2023 EP 23219288
(71) Applicant: Tetra Laval Holdings & Finance S.A., 1009 Pully (CH)
(72) Inventor: TOFT, Nils, 221 86 Lund (SE); HALLQUIST, Jakob, 221 86 Lund (SE); MÖLLER, Anna, 221 86 Lund (SE)
(74) Representative: Tetra Pak - Patent Attorneys SE

(57) **Abstract**

The present invention relates to a laminated packaging material for oxygen-sensitive products, such as liquid, semi-liquid or viscous food products, comprising a bulk layer of paper or paperboard and a barrier-coated cellulose-based substrate, as well as to a method for manufacturing of the laminated packaging material. The invention further relates to a packaging container manufactured from the laminated packaging material.

## Description

### Technical field

The present invention relates to a laminated packaging material for oxygen-sensitive products, such as liquid, semi-liquid or viscous food products, comprising a bulk layer of paper or paperboard and a barrier-coated cellulose-based substrate, as well as to a method for manufacturing of the laminated packaging material. The invention further relates to a packaging container manufactured from the laminated packaging material.

### Background of the invention

Packaging containers of the single use, disposable type for oxygen-sensitive and liquid or viscous foods are often produced from a packaging laminate based on paperboard or carton. One such commonly occurring packaging container is marketed under the trademark Tetra Brik Aseptic^{®} and is principally employed for aseptic packaging of liquid foods such as milk, fruit juices etc, sold for long term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium (Al) foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of modern, high-speed packaging machines of the type that form, fill, and seal packages from a web or from prefabricated blanks of packaging material in a continuous process. Packaging containers may thus be produced by reforming a web of the laminated packaging material into a tube by both longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally cuboid shape, such as parallelepipedal, by fold formation along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are efficiently reduced from bacteria and the filled packaging container is produced under clean conditions such that the filled package may be stored for a long time even at ambient temperature, without the risk of growth of micro-organisms in the filled product. Another important advantage of the Tetra Brik^{®} -type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

There is a need to provide alternative barrier materials to aluminium foil to reduce the carbon footprint further. Aluminium foil barriers for liquid carton food packaging are normally from 5 to 9 µm, such as most commonly about 6 µm.

A layer of an aluminium foil in the packaging laminate provides gas barrier properties quite superior to most other gas barrier materials. The conventional aluminium-foil based packaging laminate for liquid food aseptic packaging is still the most cost-efficient packaging material, at its level of performance, available on the market today.

Any other material to compete with the foil-based materials should be cost-efficient regarding raw materials, have comparable food preserving properties and have a comparably low complexity in the converting of materials into a finished packaging laminate.

Among the efforts of developing non-aluminium-foil materials for liquid food carton packaging, there is also a general incentive towards developing pre-manufactured films or sheets having high barrier properties, or towards combining several separate barrier materials in a multilayer film or sheet. Such films or sheets would replace the aluminium-foil barrier material in the conventional laminated packaging material and may further be adapted to conventional processes for lamination and manufacturing of laminated packaging materials.

In line with increased requirements to use only sustainable materials, polymeric barrier materials originating from fossil sources have become less interesting, and thus it remains to work with the types of thin barrier coatings which would be almost negligible in recycling processes and cause very little problem in an economy based on circulation of materials and renewable (non-fossil) materials, i.e. aqueous dispersion coatings and vapour deposition coatings. Such coatings are applied on substrates which do not typically provide significant barrier properties themselves. The thickness of a dispersion coated polymer is around 1-2 µm, while vapour deposited barrier coatings are as thin as below 0.5 µm, such as from 10 to 100 nm, such as from 15 to 80 nm, such as from 20 to 50 nm. Various such coatings have been developed since many years and have been combined in multilayer packaging material structures in search for an improved total performance. Although some of these coatings exhibit excellent barrier properties, the beverage carton packaging industry is still looking for optimal coatings or coating combinations, which would be able to replace aluminium foil in all respects.

Development materials of the past have e.g. concerned aqueous polymer compositions suitable for dispersion and/or solution coating of thin layers, such as PVOH, starch and the like. The common difficulty with this type of polymer binders is that they are sensitive to high moisture conditions and lose their inherent oxygen barrier properties with increasing exposure to, and content of, moisture, i.e. conditions in laminated packaging materials of filled, liquid carton packaging containers. It has been concluded that such thin, dispersion coated polymer layers need to be supplemented with further materials to improve gas barrier properties, either in the form of additional compounds in the dispersion composition, such as crosslinkers or inorganic particles, or in the form of additional material layers acting as barriers to water vapour.

An earlier patent publication WO2011/003565A1 discloses a non-aluminium-foil packaging material comprising a gas-barrier coated and metallised Kraft paper substrate for the purpose of induction heat sealing.

The earlier patent publication WO2017/089508A1 discloses that improved barrier properties may be obtained from a metallised paper in a similar packaging laminate, by selecting a paper substrate providing optimal properties. Such a metallised paper substrate provided not only improved gas barrier properties, but also indicated better stability of the metallised layer for induction heat sealing purposes.

The patent publication EP4008548A1 discloses that a base coating may improve the quality of a subsequent gas barrier dispersion coating and a metallisation coating on similar paper substrates.

The further patent publications WO2022/219056A1 and WO2023/084122A1 disclose further, improved barrier-coated cellulose-based substrates having higher densities for the same purpose of improving similar laminated packaging materials and packaging containers.

There remains, however, a need for further improved packaging laminates comprising such gas-barrier coated cellulose-based substrates, such gas-barrier coated as paper substrates. It is important that the laminated packaging materials containing barrier-coated paper substrates function well to provide good robustness and package integrity as they are formed into filled packaging containers by fold-shaping and sealing, such that they can maintain the gas barrier properties of the unfolded materials, as well as block any intrusion of substances from the exterior of the package, to preserve and secure the quality of the filled food product. In addition, there is the need for improved properties regarding recyclability and environmental sustainability of "non-foil" laminated packaging materials, i.e. laminated materials not having an aluminium foil barrier being several micrometres thick, at a reasonable cost.

According to a first aspect of the invention, there is provided a laminated packaging material for packaging of oxygen-sensitive food products, such as liquid, semi-liquid or viscous food products, comprising as layers of a sequence
a first outermost protective material layer or coating, to be directed towards the outside of a packaging container formed from the laminated packaging material,
a bulk layer of paper or paperboard or other cellulose-based material,
a barrier-coated cellulose-based substrate, the barrier-coated cellulose-based substrate comprising at least one gas barrier coating,
an inside polymer multilayer portion comprising at least a second innermost liquid tight, heat sealable material layer to be in direct contact with a product to be filled into a packaging container made from the packaging material,
the second innermost liquid tight, heat sealable material layer comprising a polyethylene polymer having a low density,
such as selected from the group consisting of low density polyethylene, LDPE, linear low density polyethylene, LLDPE, and blends thereof,
wherein the layers of the inside polymer multilayer portion are applied by means of extrusion coating onto the inner side of the barrier-coated cellulose-based substrate and comprise a load-bearing and load-distributing layer comprising a linear low-density polyethylene, LLDPE having melt flow ratio, MFR, from 4 to 20 g/10 min (190 °C/ 2.16 kg) and a melting temperature above 115 degrees C.

According to a second aspect of the invention there is provided a method for manufacturing of a laminated packaging material as described in the first aspect, comprising the steps of laminating the barrier-coated cellulose-based substrate to the bulk layer of paper or paperboard or other cellulose-based material, melt extrusion coating the first outermost protective material layer or coating, to be directed towards the outside of a packaging container formed from the laminated packaging material, onto the outer side of the bulk layer, extrusion coating the inside polymer multilayer portion comprising a second innermost liquid tight, heat sealable material layer to be in direct contact with a product to be filled into a packaging container made from the packaging material, and an interjacent load-bearing and load-distributing layer comprising a linear low-density polyethylene, LLDPE having a melt flow ratio, MFR, from 4 to 20 g/10 min (190 °C/ 2.16 kg) and a melting temperature above 115 degrees C, onto the inner side of the barrier-coated cellulose-based substrate, the second innermost liquid tight, heat sealable material layer comprising a polyethylene polymer having a low density, such as selected from the group consisting of low density polyethylene, LDPE, linear low density polyethylene, LLDPE, and blends thereof.

In a general embodiment, the load-bearing and load-distributing layer substantially comprises the linear low-density polyethylene, LLDPE, having a melt flow ratio, MFR, from 4 to 20 g/10 min (190 °C/ 2.16 kg) and a melting temperature above 115 degrees C.

In a further general embodiment, the inside polymer multilayer portion may be applied in at least two consecutive steps as separate layers, by means of melt extrusion coating, with at least partial solidification of the prior, melt-extrusion applied layer before the next melt-extrusion layer is applied onto the prior layer.

The inside polymer multilayer portion may further comprise a tie layer comprising an adhesive polymer adjacent and in contact with the barrier-coated, inner side of the cellulose-based, fibrous substrate.

The load-bearing layer may have a surface weight from 8 to 25 g/m², such as from 10 to 25 g/m², such as from 12 to 25 g/m², such as from 15 to 25, such as from 15 to 20 g/m².

In a third aspect of the invention there is provided a packaging container comprising the laminated packaging material described above. According to an embodiment, the packaging container is manufactured at least partly from the laminated packaging material of the invention, and according to a further embodiment it is made in its entirety of the laminated packaging material.

All features and embodiments described in connection with one aspect of the invention can be combined and realized with any other aspect of the invention.

### Detailed description

By the term "long-term storage", used in connection with the present invention, it is meant that the packaging container should be able to preserve the qualities of the packed food product, i.e. nutritional value, hygienic safety, and taste, at ambient conditions for at least 1 or 2 months, such as at least 3 months, preferably longer, such as 6 months, such as 12 months, or more.

By the term "package integrity", is generally meant the package tightness, i.e. the resistance to leakage or breakage of a packaging container. The term encompasses the resistance of the package to intrusion of microbes, such as bacteria, dirt, and other substances, that may deteriorate the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes, ruptures, and the like within each material layer itself. A local thin area or point, a so-called "thinning", may lead to a pinhole or a rupture in a polymer layer. Yet another contribution comes from the strength of the sealing joints, by which the material is sealed together at the formation of a packaging container. Regarding the laminated packaging material itself, the integrity property is thus generally focused on the ability to withstand thermal- and mechanical loads e.g., during folding and sealing, without fracturing. More specifically, good adhesion is needed between the respective laminate layers and its adjacent layers, as well as high quality of the individual material layers. Regarding the sealing of the packages, the integrity is mainly focussed on the quality of the sealing joints, which is ensured by well-functioning and robust sealing operations in the filling machines, which in turn is ensured by adequately adapted heat-sealing properties of the laminated packaging material.

The term "liquid or semi-liquid food" generally refers to food products having a flowing content, i.e. including food products having a high viscosity, like sauces, pastes and soups, and food products that optionally may contain pieces of food. Dairy and milk, soy, rice, grains and seed drinks, juice, nectar, still drinks, energy drinks, sport drinks, coffee or tea drinks, coconut water, wine, soups, tomatoes, sauce (such as pasta sauce) and olive oil are some non-limiting example of food products contemplated.

The term "aseptic" in connection with a packaging material and packaging container refers to conditions where microorganisms are eliminated, inactivated, or killed. Examples of microorganisms are bacteria and spores. Generally, an aseptic process is used when a product is aseptically packed in a packaging container. For the continued aseptic performance during the shelf-life of the package, the package integrity properties are of course very important. For long-term shelf-life of a filled food product, it may furthermore be important that the package has barrier properties towards gases and vapours, such as towards oxygen gas, to keep its original taste and nutritional value, such as for example its vitamin C content.

By the term "bulk layer" is normally meant the thickest layer or the layer containing the most material in a multilayer laminate, i.e. the layer which contributes most to the mechanical properties and the dimensional stability of the laminate and of packaging containers folded from the laminate, such as paperboard or carton.

By the term "non-foil" packaging material, is meant a laminated packaging material, which does not comprise an aluminium foil of a thickness in the micrometer-scale, such as conventional aluminium foils for liquid carton packaging which are normally from 6 to 9 µm thick. A "non-foil" packaging material may comprise a metallisation layer, however, as the thickness of e.g. an aluminium metallisation layer is in the nano-meter scale. The amount of aluminium material employed in such a metallisation coating is very low, and have, in comparison to aluminium foils, a significantly reduced impact on recycling and exploitation of material resources.

The term "dispersion coating" herein relates to a coating technique in which an aqueous or substantially aqueous dispersion, suspension, emulsion or solution of a polymer is applied to the surface of a substrate layer, usually in the form of a continuous web, to form a solid, substantially non-porous film after drying. The term "dispersion" covers thus also any suspension, emulsion or solution or mixes thereof, that would be capable of providing such a coating after drying. Polyvinyl alcohols (PVOH, PVAL) are typical polymers suitable for dispersion coating, but may for example at high saponification degrees in practice rather be polymer solutions, or mixes of dispersed and dissolved PVOH. A dispersion-coated barrier layer or coating is formed by a dispersion coating, also called "liquid-film coating", techniques. An aqueous dispersion may comprise fine polymer-based particles and thus be a "latex".

The term "latex" as used herein refers to a composition comprising an aqueous suspension or dispersion or emulsion of polymer particles, which can be natural polymers, synthetic polymers, synthetic polymers derived from biomasses or combinations thereof.

The term "polyethylene" refers to a polymer comprising ethylene monomers at from about 90 to 100 mol%. There are various types of polyethylene, as explained below.

Low density polyethylene, LDPE, has a density of 917 to 930 kg/m³. It is typically polymerised from ethylene monomers alone and has a branched polymer chain structure with long chain branches, leading to a more branched and less tightly packed molecular arrangement, and a lower overall density than for medium density polyethylene, MDPE, and high density polyethylene, HDPE.

The term "linear low density polyethylene" (or "LLDPE") covers all linear low density polyethylenes, including "ZN-LLDPE" polymerised by means of Ziegler-Natta type catalysts as well as "m-LLDPE" polymerised by catalysts of so-called "constrained geometry", or "single-site" catalysts, such as "metallocene" catalysts, and other linear low density polyethylenes. Both ZN-LLDPE and m-LLDPE are typically produced by copolymerising an ethylene monomer with a C₄-C₈, more preferably a C₆-C₈, alpha-olefin alkylene monomer, the latter in the presence of a metallocene catalyst. 1 to 10 mol%, suitably 8 to 10 mol%, comonomer content is typical. LLDPE has significant numbers of short branches. It differs structurally from conventional low-density polyethylene (LDPE) because of the absence of long chain branching. LLDPE polymers typically have a narrower molecular weight distribution than conventional LDPE (this is true for m-LLDPE especially) and significantly different properties. A higher number of short chain branches, will lead to a lower degree of crystallinity, because the crystallisation is suppressed in the polymer and therefore its density becomes lower than for MDPE and HDPE.

When occasionally referring to "mPE" in this application, is meant a polymer blend for a heat sealable innermost layer, comprising at least 50 wt% mLLDPE and up to 50 wt% LDPE, preferably comprising about 70 weight-% of mLLDPE and about 30 weight-% of LDPE. (e.g. in connection to the figures)
High density polyethylene, HDPE, and medium density polyethylene, MDPE, suitable for the inside polymer multilayer portion in the laminated packaging material of the invention has a density of 930 to 970 kg/m³. Up to 2 mol% comonomer content is typical in these polymers of linear type polymer molecules. The lack of long chain branching is ensured by an appropriate choice of catalyst (e.g. ZN catalysts) and the reaction conditions.

MDPE may have a medium level of density, typically ranging from 0.926 to 0.940 g/cm³, while HDPE may have a higher density, typically ranging from 0.941 to 0.965 g/cm³.

A comparative load-bearing layer, to be included in the inside polymer multilayer portion and subject to a co-pending patent application filed at the same time as the present application, comprises an HDPE or MDPE polymer. It may comprise a polymer blend composition including from 30 to 90 weight-% of HDPE or MDPE and from 10 to 70 weight-% of LDPE or a linear low density polyethylene, preferably from 50 to 80 weight-% HDPE or MDPE and from 20 to 50 weight-% LDPE. LDPE adds some load-distributing properties to the load-bearing properties of most pure HDPE or MDPE polymers, such that they become easier to melt process and also such that they substantially maintain their thermomechanical properties, while the tensile properties upon mechanical strain and stress are improved and their anisotropic behaviour is reduced. This is advantageous at fold-forming, when used as a material layer in a laminated carton material. HDPE and MDPE polymers suitable for the inside polymer multilayer portion in the present invention preferably have a density from 0.93 to 0.965 kg/m³.

According to the present invention, there is thus instead a load-bearing and load-distributing layer to be included in the inside polymer multilayer portion, which comprises a linear low-density polyethylene, LLDPE, having melt flow ratio, MFR, from 4 to 20 g/10 min (190 °C/ 2.16 kg) and a melting temperature above 115 degrees C. This LLDPE is thus a polymer adapted by i.a. its melt flow ratio to be suitable for extrusion-coating and which has a high melting temperature, Tm, above 115 °C. Preferably, it has a melting temperature above 118 °C, more preferably above 120 °C. Better suitability for extrusion coating is obtained with such LLDPE has an MFR from 6 to 15, such as 8-12 such as 8-10 g/10 min (190 °C/ 2.16 kg). LLDPE polymers fulfilling these conditions may thus be suitable for the invention. Such suitable LLDPE polymers may include ZN-LLDPE polymers and m-LLDPE polymers, blends thereof and also suitable bimodal LLDPE polymers.

In another embodiment of the present invention, the load-bearing and load-distributing layer comprises a polymer blend including a major portion, i.e. at least 50 wt%, of the LLDPE having a melt flow ratio, MFR, from 4 to 20 g/10 min (190 °C/ 2.16 kg) and a melting temperature above 115 degrees C, and an LDPE, HDPE or MDPE, preferably an HDPE or MDPE.

In a further embodiment of the present invention, the load-bearing and load-distributing layer comprises a polymer blend including from 50 to 95, such as from 80 to 95 weight-% of the LLDPE having a melt flow ratio, MFR, from 4 to 20 g/10 min (190 °C/ 2.16 kg) and a melting temperature above 115 degrees C and from 5 to 50, such as from 5 to 20 weight-% of an HDPE or MDPE.

For the general realization of this invention, the load-bearing and load-distributing layer thus comprises in the majority, such as at least 80 weight-% of the linear low-density polyethylene, LLDPE, having a melt flow ratio, MFR, from 4 to 20 g/10 min (190 °C/ 2.16 kg) and a melting temperature above 115 degrees C.

It has been seen that such an LLDPE polymer, will have a both load-bearing and load-distributing capacity, such that it is both resisting the mechanical loads on the oxygen barrier layers during fold-forming and being capable to handle the strain in the polymer in a way that also promotes better properties without blending with further polymers to add load-distributing properties during folding. As seen from the test results disclosed herein, it also becomes clear that the load-bearing mechanisms are different from the ones in HDPE or MDPE and that the LLDPE polymers are in addition more capable to handle and reform the strain, to make the laminated packaging material stronger and more robust for use in cuboid package fold-forming in high-speed filling machines.

In a further embodiment of this invention (and the copending invention), the inside polymer multilayer portion may be applied in two consecutive steps as separate layers, by means of extrusion coating. Preferably, the inside polymer multilayer portion may be applied in at least two consecutive steps as separate layers, by means of melt extrusion coating, with at least partial solidification of a prior, melt-extrusion applied layer before a next melt-extrusion layer is applied onto the prior layer.

Most suitably, the first melt extrusion coating operation applies the layer of an adhesive, functionalised polyethylene, such as ethylene acrylic acid, EAA, together with the load-bearing and load-distributing layer of the LLDPE, having a melt flow ratio, MFR, from 4 to 20 g/10 min (190 °C/ 2.16 kg) and a melting temperature above 115 degrees C, in a first step by coextrusion coating and allows the thus coated layers to solidify at least partly before the innermost liquid tight, heat sealable material layer comprising a polyethylene polymer having a low density, is subsequently applied in the second step of extrusion coating.

In an another embodiment, a first step of coextrusion coating applies the adhesive, functionalised polyethylene layer together with a first, thinner layer of the LLDPE onto the barrier coatings of the barrier-coated cellulose-based substrate, and subsequently applies, in a second step, a second coextrusion coating of a further, thin layer of the same LLDPE, adhering to the first, solidified, thinner LLDPE layer, together with the innermost liquid tight, heat sealable material layer comprising a polyethylene polymer having a low density.

Alternatively, the three layers may be applied together in a first coextrusion coating step, however with a part thickness only of the innermost layer of the liquid tight, heat sealable material comprising a polyethylene polymer having a low density, and subsequently, in a second step, a second extrusion coating of a further, thinner layer of the innermost liquid tight, heat sealable material comprising a polyethylene polymer having a low density, may be applied.

Preferably, the two extrusion-coating steps are performed in different lamination stations, each with a lamination roller nip and melt extrusion film die, such that the first extrusion-coated layer entirely solidifies before the second extrusion-coating step is performed in the second lamination station.

The step-wise extrusion coated layers within the inside polymer multilayer portion can be understood from studying the polymer interfaces with microscopy techniques. The layer interface will follow a straight and more distinct line, since the first applied layer will have solidified, by contact to a chilled metal roller, before the next layer was applied, rather than an uneven and more fuzzy and co-melted and co-solidifed line, and the layers will have more even thicknesses.

The total surface weight of the load-bearing layer, or layers, may suitably be from 8 to 25 g/m², such as from 10 to 25 g/m², such as from 12 to 25 g/m², such as from 15 to 25, such as from 15 to 22 g/m².

The laminated packaging material thus comprises a bulk layer of paper or paperboard or other cellulose-based material and a barrier-coated cellulose-based substrate.

A paper or paperboard bulk layer for use in the invention may have a thickness from about 70 µm up to about 600 µm, and a surface weight of approximately 70 to 500 g/m², preferably about 200 to 300 g/m², and may be a conventional paper or paperboard of suitable packaging quality. The purpose of the bulk layer in the laminated packaging materials of the present invention is to provide dimensional stability, rigidity, and stiffness to packaging containers, e.g. for use in wet and humid conditions and/or for storage of liquids and wet (heavy) food products. Clay-coated duplex paperboard is preferred. For larger packages a paperboard of 400 to 500 µm and higher bending stiffness is preferred, such as 260 mN. For portion packs of 150 to 250 mL size, a bending stiffness of 80 mN is preferred.

For low-cost aseptic, long-term packaging of liquid food, a thinner packaging laminate may be used, having a thinner paper core layer. The packaging containers made from such packaging laminates are not fold-formed and more similar to pillow-shaped flexible pouches. A suitable paper for such pouch-packages usually has a surface weight from about 50 to about 140 g/m², preferably from about 70 to about 120 g/m², more preferably from 70 to 110 g/m². As the barrier-coated substrate in this invention in itself may contribute with some stability to the laminated material, the paper layer corresponding to a "bulk" layer may be even thinner, and interact with the barrier cellulose-based substrate in a sandwich interaction to still produce a laminated packaging material having the desired mechanical properties altogether.

Barrier-coated cellulose-based substrates, or so-called "paper-barriers" pose special challenges. Unlike aluminium foil or barrier-coated polymer films, the barrier substrate of a paper or cellulose sheet in its interior may essentially comprise organic material from virgin cellulose fibres. Even if the cellulose fibres are as clean as possible, being cooked and chemically treated during paper manufacturing and thus thoroughly treated, they are not as clean as the interior of polymer material layers or inorganic foils or deposition coatings. The barrier coatings that are applied on the inside of the cellulose sheet will be heated as they are applied, in drying and deposition processes, respectively, and will thus be clean materials in the laminated material. The barrier coatings will thus, insofar as they are of good quality, protect the inside of the package from the interior cellulose sheet fibres, as long as the coatings are unbroken. The coatings are thin and sensitive, however, relative to an aluminium foil, which has a thickness from 5-10 µm.

This in turn poses challenges on the inside polymer layers, which are thermoplastic polymers coated or laminated onto the barrier coatings of the paper barrier, to protect them, as well as the filled food product, in a packaging container fold formed from a laminated material comprising the paper barrier. The polymer inside layers need to be applied as homogenous coatings or as pre-manufactured films and they have multiple purposes. The inside polymer multilayer portion needs to be heat sealable, i.e. thermo-weldable, at high-speed in filling and packaging machines, and needs to keep the formed packaging containers liquid tight both towards the inside of the package and towards the outside. Furthermore, the inside polymer layers need to help protect the barrier coatings from being destroyed during fold-forming and filling processes, as well as maintaining good integrity, should that still happen, towards migration of microbes through the package and the materials into the filled food product. Adding thicker and stronger such polymer layers may help to some extent, but such measures weigh against the requirements that we for environmental sustainability must reduce the use of polymer materials in carton liquid packaging materials, and that the packaging materials need to be reasonably easy to open for the end-consumer.

From working with improved cellulose-based barrier materials, it is understood that it is important to minimize the "loss" of oxygen barrier properties upon fold forming the laminated materials comprising the barrier materials. The oxygen barrier loss is an indication that the thin and sensitive barrier coatings are to some extent damaged upon fold-forming and reshaping into filled packaging containers. Therefore, it is especially regarding paper barrier materials relevant to measure and understand the resulting Package-OTR rather than the OTR on flat material. The Package-OTR has by late developments been well improved, based on improvements in the cellulose-based substrate as such.

From the development of packaging laminates comprising barrier-coated cellulose-based substrates, it has however sometimes been seen that the configuration of the conventional coextrusion-coated inside polymer multilayer portion resulted in occasional bad packages, thus being insufficient in terms of integrity under severe circumstances, while the oxygen barrier of the packages in general was mostly good. The laminated materials were therefore improved further by including also a thermo-sealable, pre-manufactured film as the innermost layer. Pre-manufactured films may have good homogeneity and reliability regarding thickness and quality, and significantly fewer defects (pinholes, un-evenness etc) than melt extrusion coated layers. A laminate having a pre-manufactured, cast film of LLDPE polymers, is thus currently developed, which adds toughness and good integrity to the laminate, while it does at least not detrimentally prevent openability of the full material. Such a film is, however, expensive and requires a more difficult lamination operation in the laminate production, while the openability is unfortunately significantly reduced, even if not to an impossible extent.

A suitable cellulose-based substrate for the invention is not limited to a certain type of paper or cellulose, but includes cellulose-based substrates based on any type of native fibrous or fibrillar cellulose. The invention is not applicable, however, to substrates from plastics or homogeneous polymers, such as films made from regenerated cellulose, which is not in fibrous, i.e. native, or fibrillar cellulose form any longer.

A cellulose-based substrate may be designed to have a high density, and substantially less porosity, by application of high pressure during its manufacturing process. Typically, densification may take place by calendering, preferably super-calendering. Densities above 850 kg/m³ , preferably from 900 to 1400 kg/m³, more preferably from 1000 to 1400 kg/m³, can be obtained by such high-pressure, multi-roller treatment. Such a high-density cellulose-based substrate may consitute a good substrate for subsequently applied, thin gas barrier coatings of uniform quality, thanks to its obtained lower porosity. Depending on how it is made, it may contribute with further advantageous properties for the use in laminated packaging materials.

In an embodiment of such a higher density cellulose-based substrate, the substrate is a paper impregnated with a water soluble or water dispersible polymer. Such a cellulose-based substrate may for example first be impregnated with a water-soluble polymer and subsequently be treated in a super-calendering treatment. In this way, the fibre matrix impregnated with polymer may be compressed and densified, such that an interlocked fibre-composite without, or with significantly reduced, porosity is obtained. Moreover, such a cellulose-based substrate can obtain a higher density to avoid air-filled pockets and cavities in the substrate. This may be advantageous in subsequent processes of vapour deposition coating of barrier coatings on the substrate.

Alternatively, at least the top surface (i.e. the surface to be barrier-coated) may be first pre-coated with a base layer and subsequently be treated in a super-calendering treatment, to compress and densify the surface of the cellulose-based substrate. Depending on the pressure and the treatment process, the cellulose-based substrate may be highly compacted to obtain a high-density substrate with a density above 900 kg/m³, preferably above 1000 kg/m³.

Generally, to be suitable for a final barrier-coating step by means of a vapour deposition coating process, the fibrous part of a paper substrate needs to be thin and have a low grammage weight of 70 g/m² or below, preferably 60 g/m² or below, such as 50 g/m² or below, preferably 45 g/m² or below, for reasons of efficiency and production economy. On the other hand, fibrous cellulose substrates thinner or with a lower grammage than 30 g/m² may be mechanically too weak and/or less dimension stable, when they are coated with wet dispersions and subsequently dried, thus exhibiting shrinkage or curling problems or even web breaks. It is thus preferred to use cellulose-based substrates having a grammage of from 30 to 70 g/m², such as from 30 to 65 g/m², such as from 35 to 60 g/m², such as from 35 to 55 g/m².

It may be advantageous to use an as thin as possible cellulose-based substrate, because then less polymer may be needed in adjacent liquid-tight, heat-sealable material layers. The thickness of the cellulose-based substrate may be from 35 to 70 µm, such as from 35 to 65 µm, such as from 40 to 60 µm, such as from 40 to 50 µm.

The cellulose substrate for use according to the invention, may be formed from cellulose fibres comprising at least 50% by dry weight of chemical pulp, such as sulphate or sulphite pulp. Chemical pulp is used to obtain toughness in a paper for high-speed coating and converting processes and for use in final packages.

Sulphate or "Kraft" pulp may be advantageous for improved repulping in recycling, and general dewatering of the fibres.

For the purpose of recycling and good dewatering ability, the fibres of the cellulose-based substrate may have a Canadian Standard Freeness (CSF) higher than 300 ml, such as higher than 350 ml, such as higher than 400 ml, as measured by ISO 5267-2:2001. Correspondingly, the fibres of the cellulose-based substrate may have a Schopper-Riegler value lower than 40 degrees SR, such as lower than 36 degrees SR, such as lower than 32 degrees SR, as measured according to ISO 5267-1:1999.

Softwood pulp may provide strength/toughness properties in the resulting paper, and may be comprised in the pulp by at least 50 wt%. In an embodiment, the cellulose-based substrate comprises at least 50 wt%, such as from 60 to 100 wt%, such as from 70 to 100 wt% Kraft cellulose, such as bleached Kraft cellulose.

In an alternative embodiment, a suitable cellulose-based substrate for carrying i.a. at least one gas barrier coating, is made essentially of cellulose fibres laid together to form a fibrous sheet or paper of lower density, meaning that in between the fibres there will normally be cavities, pockets or porosities filled by air. Such a fibrous, porous, cellulose substrate may have a relatively low density from 700 to 850 kg/m³, more preferably from 700 to 830 kg/m³, most preferably from 700 to 800 kg/m³. Such a relatively low density is normally achieved by not compressing the cellulose fibres together too much in the substrate and by using fibrous cellulose, as distinguished from fibril or crystal variants of cellulose, i.e. so-called nanocellulose or micro-fibrillar cellulose (MFC), to ensure consistent porosity between the fibres in the interior of the substrate. A fibrous, porous, cellulose substrate is normally a conventional paper, which may be readily recycled to a fibre recycling stream, such as a used beverage carton (UBC) recycling stream. It may be made essentially from Kraft pulp fibres, thus being a so-called Kraft paper.

A different type of cellulose-based substrates suitable for use in the invention may comprise low molecular celluloses such as microfibrillar cellulose, MFC, nanofibrillar cellulose, NFC, or nanocrystalline celluloses, NCC, within its fibrous structure. The inclusion of such low-molecular cellulose would fill the voids and pores in the fibrous cellulose, to densify the structure, rather than preserving its porosity.

To the latter type of cellulose-based substrates belong also so-called MFC films, which may have more the character of a polymer film although being mainly made up from fibrilllar cellulose molecules, and which are thus not made from regenerated cellulose. This fact has the important advantage that the cellulose-based film substrate is still re-dispersible in water, i.e. re-pulpable, and thus also at least partly recyclable to a fibre-based recycling stream.

In un-coated, lower-density cellulose-based substrates, only the top surface, or both surfaces of the substrate may be smoothened, which is possible by so-called machine glazing or machine finishing methods directly after the formation, while drying the paper during the paper manufacturing process.

In an embodiment, the cellulose-based substrate may be pre-coated with a base layer, to provide a smooth and/or dense or compact top surface to enable thin, uniform, subsequently applied gas barrier coating(s) with even thickness and few defects, such as pinholes, across the whole surface.

In a further embodiment, the barrier-coated cellulose-based substrate is pre-coated with a base-layer beneath the at least one gas barrier layer, and may be applied by means of aqueous solution or dispersion coating and subsequent drying. A lower-density substrate, or a substrate having a top surface with high roughness, may for example advantageously be pre-coated with a base layer of a composition comprising a polymer binder and, optionally, inorganic particles or pigments.

Examples of binders for smoothening base layers may be aqueous compositions of starch, starch derivatives or modified start, or cellulose-ethers, such as carboxy-methyl cellulose (CMC) or hydroxyethyl cellulose (HEC).

A further example of a densifying and smoothening base layer is a precoating of an aqueous composition of a latex binder and inorganic particles.

A suitable base layer may comprise from 30 to 96 weight-%, such as from 40 to 96 weight-%, such as from 50 to 96 weight-%, such as from 55 to 96 weight-%, such as from 60 to 96 weight-%, such as from 65 to 96 weight-%, such as from 70 to 96 weight-%, of the inorganic particles and from 4 to 70 weight-%, such as from 4 to 60 weight-%, such as from 4 to 50 weight-% such as from 4 to 45 weight-%, such as from 4 to 40 weight-%, such as from 4 to 35 weight-%, such as from 4 to 30 weight-%, of a polymer binder and further additives, based on dry weight. The base layer may thus be a so-called clay-coat or pigment coating, and has the purpose to provide a smooth, dense and flexible surface applied onto a fibrous cellulose substrate, which acts both to resist steam expansion of moisture entrapped in the air pockets of the fibrous cellulose substrate and to provide an optimal surface for coating with further gas barrier layers, and to altogether provide good oxygen barrier in a packaging container, i.e. also after fold-forming and heat sealing a laminated packaging material comprising the barrier-coated cellulose-based substrate into a packaging container.

The inorganic particles or filler material may comprise various inorganic particles, such as clay minerals, silica particles, talcum, and calcium carbonate. The thus dispersion-coated and dried layer of such a base coating may act as a barrier to migrating small molecules, such as water vapour, but may also act more efficiently as a barrier to resist sudden expansion of water vapour, i.e. steam blisters bursting towards the layer of the steam-resistant base coating from the adjacent substrate layer of fibrous cellulose.

In an embodiment, the inorganic particles comprise laminar silicate particles, which may contribute further to barrier properties in the material, by the creation of overlapping mineral flakes or lamellae, thus preventing migration of small molecules through the material. Such laminar inorganic particles may be selected from clays, such as kaolin clay or bentonite clays, silicates, and talcum particles.

The polymer binder of base layer may be an aqueous emulsion binder, such as selected from the group consisting of aqueous emulsions of acrylic or methacrylic homo- or co-polymers, such as styrene-acrylate latex, vinyl acrylic copolymer latex or vinyl acetate acrylate copolymer latex, and of styrene-butadiene copolymers, such as styrene-butadiene latex, and of biobased emulsion binders, such as modified starch latex, and of vinyl alcohol polymers, such as polyvinyl alcohol, PVOH, or ethylene vinyl alcohol, EVOH, and of other modified starches or starch derivatives.

The base layer may be applied by means of aqueous dispersion coating at an amount of from 5 to 25 g/m², such as from 7 to 22 g/m², such as from 7 to 20 g/m², such as from 7 to 19 g/m², such as from 10 to 20 g/m², such as from 10 to 19 g/m², dry weight.

After dispersion coating and drying of the aqueous base layer precoating, the thus coated surface of the base-coated, fibrous cellulose substrate is smoothened and compacted, such as by calendering, or such as by supercalendering to provide a higher density substrate, to obtain the optimal surface properties, i.e. smoothness and low porosity, for receiving further coatings of gas barrier materials.

The free, dried but uncoated surface of the base layer coating as measured after such soft calendering may have a surface roughness below 150 ml/min Bendtsen, such as below 100 ml/min Bendtsen, such as below 80 ml/min Bendtsen, such as below 50 ml/min Bendtsen. Preferably, the surface roughness is very low and can be measured to exhibit values below 3 µm, such as below 2.5 µm, such as below 2 µm, such as 1.5 µm or lower, such as 1.2 µm or lower, such as 1.0 µm or lower, as measured according to ISO 8791-4 (PPS). Such level of smoothness is improving the film formation of subsequently applied gas barrier coatings, thus providing as high gas barrier as possible.

It is further believed that the inherent flexibility of a base layer supports any subsequently applied, less flexible, barrier coatings, to stay coherent as well as adherent upon folding of the barrier-coated cellulose substrate.

The polymer of the base layer may be selected to exhibit a glass transition temperature from -30 to +30 degrees Celsius, such as from -30 to +20 degrees Celsius, to provide inherent flexibility to a paper.

The free, uncoated surface of the base layer applied on the base-coated cellulose-based substrate also, in turn, has a low porosity, measured as a Gurley air resistance above 1500 s /100 ml, such as above 3000 s/100 ml. The low porosity further improves the film formation of subsequently applied gas barrier coatings, in that no or very low amounts of the oxygen gas barrier composition liquid is absorbed into the fibrous molecules at the surface of the substrate.

The cellulose-based substrate may further have a second base layer on its opposite side, which may be of the same type as the base layer precoating on the first side of the substrate.

The base layer may be applied by means of suitable dispersion coating techniques, such as blade coating, rod coating, bar coating, smooth roll coating, reverse roll coating, lip coating, air knife coating, curtain flow coating, dip coating and slot die coating methods, and subsequent drying to evaporate the dispersion medium, normally water, by forced convection drying. A base layer having high content of inorganic particles is suitably applied by blade coating, roll coating or rod coating technology and subsequent drying. The term aqueous dispersion coating includes thus coating of aqueous compositions of binder polymer emulsions, dispersions, suspensions, solutions, and latex formulations, further comprising a substantial amount, such as more than 50 weight-% of more of pigments, inorganic particles, or other filler material.

In yet a further embodiment, the cellulose-based substrate of the barrier-coated cellulose-based substrate has a strain at break in the machine direction in the range of 3.5% - 9.0%, such as 4.0% - 8.0%, as measured according to ISO 1924-3:2005. It may be base-coated or impregnated with a polymer and subsequently calendered to compress and lock the cellulose-based substrate in the state of high density, as described in a co-pending application.

The at least one gas barrier layer may be a dispersion coated layer of an aqueous oxygen gas barrier composition, i.e., applied by means of aqueous dispersion or solution coating.

The aqueous oxygen gas barrier composition may comprise a polymer selected from the group consisting of vinyl alcohol polymers and copolymers, such as from the group consisting of polyvinyl alcohol, PVOH, and ethylene vinyl alcohol, EVOH, starch and starch derivatives, xylan, xylan derivatives, nanofibrillar cellulose/ microfibrillar cellulose, NFC/ MFC, and blends of two or more thereof.

In a further embodiment, the aqueous oxygen gas barrier composition of the at least one gas barrier layer comprises a polymer selected from the group consisting of starch and vinyl alcohol polymers and copolymers, such as a polymer selected from the group consisting of polyvinyl alcohol, PVOH, ethylene vinyl alcohol, EVOH and starch.

In a further embodiment, the aqueous oxygen gas barrier composition of the at least one gas barrier layer comprises a polymer selected from the group consisting of vinyl alcohol polymers and copolymers, such as a polymer selected from the group consisting of polyvinyl alcohol, PVOH, and ethylene vinyl alcohol, EVOH.

The at least one gas barrier layer may suitably be applied by means of aqueous dispersion or solution coating at a total grammage from 0.5 to 4 g/m², such as from 0.5 to 3 g/m², such as from 0.5 to 2 g/m² dry weight. Higher grammages also generally require higher drying capacity, or processing at lower coating speed, to remove more water from the aqueous coating compositions. Lower grammages are insufficient for providing a gas barrier and higher grammages normally make the coatings more brittle and prone to cracking, upon fold-forming of the substrate and the laminated packaging material.

Processes suitable for coating of low dry-content gas-barrier polymer dispersion/ solution compositions are broadly any suitable wet coating methods, such as gravure roll coating, smooth roll coating, reverse roll coating, wire bar coating, blade coating, lip coating, air knife coating, and curtain flow coating methods.

It is highly important that the coating applied is evenly coated, forming a continuous and coherent film on the surface and furthermore being defect-free, i.e. substantially without pinholes, blisters or coating misses. Even if a very small defect, its effect on the barrier properties may be negative, which is not desirable. In non-foil packaging materials, i.e. materials without a thick metal foil that can ensure good barrier properties in general, it is very important to reduce the defects of the very thin and more sustainable material coatings to a minimum. It is advantageous to apply at least two coatings on top of each other, to cover and overlap any defects in the separate, thin coating layers.

In a more specific embodiment, the oxygen barrier dispersion coating compositions are based on the two most common types of polymers and copolymers suitable for dispersion coating, based on on vinyl alcohol monomers, i.e. polyvinyl alcohol (PVOH) and ethylene vinyl alchol (EVOH).

The oxygen gas barrier polymer may preferably be PVOH, because it provides good film formation properties, gas barrier properties, cost efficiency, food compatibility and odour barrier properties.

A PVOH-based oxygen gas barrier composition performs best when the PVOH has a degree of saponification of at least 98 %, preferably at least 99 %, although also PVOH with lower degrees of saponification will provide oxygen barrier properties.

Nano-crystalline cellulose, NCC, is a form of nano-cellulose but is not the same as "microfibrillar cellulose", "MFC" (CMF) or "nanofibrillar cellulose", NFC (CNF)".

MFC/ NFC may thus contain longer particles, so-called "fibrils" having a width of 10-1000 nm, and a length of at least 1 µm, such as up to 10 µm, such as up to 100 µm.

Both MFC and NFC have an aspect ratio of 50 or above, while NCC/ CNC may be defined to have an aspect ratio below 50, e.g. in accordance with ISO/TS 20477:2017 and the draft TAPPI norm WI3021.

The term "NCC", is used for shorter particles and "rod-like" particles, having a width of 3-100 nm, and a length from 100 too above 1000 nm, such as from 100 to 3000 nm, such as from 100 to 1000 nm, such as from 100 to 500 nm. The majority of the NCC particles in the composition should have this dimension, may be from 100 to 500 nm length, such as from 100 to 200 nm and with a small width of from 3 to 100 nm.

The oxygen barrier dispersion coating composition may further comprise from about 1 to about 30 weight %, of an inorganic laminar compound based on dry coating weight, such as exfoliated nanoclay particles, such as bentonite. Thus, the barrier layer may include from about 99 to about 80 weight % of the polymer based on the dry coating weight. An additive, such as a dispersion stabiliser, defoamer or the like, may also be included in the oxygen gas barrier composition, preferably in an amount of not more than about 1 weight % based on the dry coating. The total dry content of the composition is preferably from 5 to 20 weight-%, such as from 7 to 15 weight-%.

In an embodiment, the gas barrier dispersion layer may be applied in two, three or even four consecutive steps with intermediate drying, as part-layers. When applied as two part-layers or "part-coatings", each coating may suitably be applied in amounts from 0.2 to 2.5 g/m², preferably from 0.5 to 1.5 g/m², and allows a higher quality total layer from a lower amount of liquid oxygen gas barrier composition. More preferably, the two part-layers may be applied at an amount of from 0.5 to 1.5 g/m² each.

In an alternative embodiment, the at least one gas barrier layer is a barrier deposition coating, applied by means of a vapour deposition method.

In a further embodiment, the laminated packaging material comprises the at least one gas barrier layer, being a first gas barrier layer, being applied by means of aqueous dispersion or solution coating, and the laminated packaging material comprises at least one further gas barrier coating, applied onto the at least one, or first, gas barrier layer, the at least one further gas barrier coating being a barrier deposition coating, applied by means of a vapour deposition method, the barrier-coated cellulose substrate thus providing gas barrier properties as well as water vapour barrier properties in the laminated packaging material.

Almost all polymer materials suitable for dispersion coating of water-dispersible or water-soluble compositions to provide oxygen barrier properties have the disadvantage that their oxygen barrier deteriorates with increasing humidity in and surrounding the dried material layer. Thus, a coating or layer capable of providing barrier properties towards migrating water vapour is needed to keep the ocygen barrier layer(s) dry. Most barrier deposition coatings, applied by vapour deposition methods, provide good water vapour barrier properties. Depending on deposition method, quality and thickness, they also provide more or less of oxygen barrier properties. In particular metallization coatings provide mainly water vapour barrier, but also quite some oxygen barrier, provided from a good coating quality and adequate thickness.

Accordingly, such a barrier-coated cellulose-based substrate, provides low oxygen transmission and low water vapour transmission in a laminated packaging material and further provides good such barrier properties after fold-forming and heat sealing of the laminated material into packaging containers.

The at least one further gas barrier coating includes thus at least one barrier deposition coating, applied by means of a vapour deposition method, but may also include a further dispersion coating of an aqueous barrier composition, which may be applied by means of dispersion or solution coating, before or after the barrier deposition coating.

The barrier deposition coating may be a vapour deposition coating of a material selected from metals, metal oxides, inorganic oxides, and carbon coatings, such as aluminium metallisation, aluminium oxide, silicon oxide and diamond-like carbon coatings. In an embodiment, the barrier deposition coating is a vapour deposition coating selected from the group consisting of an aluminium metallisation coating and aluminium oxide, AlOx, and preferably it is an aluminium metallisation coating. An aluminium metallization coating, or combined aluminium and aluminium-oxide coating, provides not only oxygen gas and water vapour barrier properties to a heat sealable laminated packaging material, but also barrier properties towards incoming light from outside the package.

In an embodiment, a base-coated and subsequently gas barrier dispersion coated cellulose-based substrate may have on the surface of its first, gas-barrier coated side, a further vapour deposition coating of a gas barrier material selected from metals, metal oxides, inorganic oxides and amorphous diamond-like carbon coatings, as a further gas barrier coating. The vapour deposition coating may for example be applied by means of physical vapour deposition (PVD) or chemical vapour deposition (CVD), such as by plasma enhanced chemical vapour deposition (PECVD). It may more specifically be selected from the group consisting of an aluminium metallisation coating and aluminium oxide, AlOx. Preferably it is an aluminium metallisation coating.

The barrier-coated cellulose-based substrate may thus be coated with a gas barrier material by means of vapour deposition coating onto its top-side surface to a thickness of from 2 to 100 nm, such as from 2 to 80 nm, such as from 2 to 50 nm, such as from 2 to 45 nm.

Generally, below 5 nm the barrier properties may be too low to be useful and above 200 nm, such as above 100 nm, such as above 50 nm, depending on the type of vapour deposition coating, the barrier coating may be less flexible and, thus, more prone to cracking when applied onto a flexible substrate and would also cost more by its higher thickness.

Other examples of vapour deposition coatings are aluminium oxide (AlOx, Al₂O₃) and silicon oxide (SiOx) coatings. Generally, PVD-coatings of such oxides are more brittle and less suitable for incorporation into packaging materials by lamination, while metallised layers as an exception do have suitable mechanical properties for lamination material despite being made by PVD.

In an embodiment, such an aluminium metallised layer is applied to an optical density (OD) of from 1.8 to 4, preferably from 1.9 to 4. At an optical density lower than 1.8, the barrier properties of the metallised film may be too low. At above 4, on the other hand, the metallisation process may take longer time, and the thermostability during the metallisation process may be lower due to higher heat load when metallising the substrate during a longer time.

Other coatings may be applied by means of a plasma enhanced chemical vapour deposition method (PECVD), wherein a vapour of a compound is deposited onto the substrate under more or less oxidising circumstances. Silicon oxide coatings (SiOx) may, for example, also be applied by a PECVD process, and may then obtain very good barrier properties under certain coating conditions and gas recipes.

DLC defines a class of amorphous carbon material (diamond-like carbon) that displays some of the typical properties of diamond. Preferably, a hydrocarbon gas, such as e.g. acetylene or methane, is used as process gas in a plasma for producing a coating of amorphous hydrogenated carbon barrier layer applied by a PECVD vacuum process, i.e. a DLC. DLC coatings applied by PECVD under vacuum provide good adhesion to subsequently laminated, adjacent polymer or adhesive layers in a laminated packaging material. Particularly good adhesion to adjacent polymer layers, are obtained with polyolefins and in particular polyethylene and polyethylene-based co-polymers.

The barrier-coated paper or cellulose-based substrate may be laminated to the bulk layer by an intermediate adhesive, or thermoplastic polymer bonding layer, thus binding the un-coated surface of the barrier-coated cellulose substrate to the bulk layer.

The bonding layer may be a polyolefin layer, such as in particular a layer of a polyolefin copolymer or blend, such as including in the majority ethylene monomer units. The bonding layer may thus bond the bulk layer to the barrier-coated cellulose-based substrate by melt extruding the molten bonding polymer as a melt layer between the webs and simultaneously pressing the three layers together, while being forwarded through a lamination roller nip under simultaneous cooling, thus providing a laminated structure by extrusion lamination. Melt extrusion lamination requires a sufficient amount of molten polymer, in this case typically a polyolefin, such as low density polyethylene, to bind the two colder surfaces together. A suitable amount may be from 12 to 20 g/m², such as from 12 to 15 g/m².

Other suitable bonding or tie layers in the interior of the laminated material, such as for example between the bulk or core layer and the barrier-coated cellulose-based substrate, or between the innermost, liquid tight and heat sealable layer and the barrier-coated paper substrate, may also be so-called adhesive thermoplastic polymers, such as modified polyolefins, which are mostly based on LDPE or LLDPE co-polymers or, graft co-polymers with functional-group containing monomer units, such as carboxylic or glycidyl functional groups, e.g. (meth)acrylic acid monomers or maleic anhydride (MAH) monomers, (i.e. ethylene acrylic acid copolymer (EAA) or ethylene methacrylic acid copolymer (EMAA)), ethylene-glycidyl(meth)acrylate copolymer (EG(M)A) or maleic anhydride (MAH) grafted polyethylene (MAH-g-PE). Another example of such modified polymers or adhesive polymers are so called ionomers or ionomer polymers. Preferably, the modified polyolefin is an ethylene acrylic acid copolymer (EAA) or an ethylene methacrylic acid copolymer (EMAA). General bonding layers such as polyolefin layers, and layers of adhesive polymers, i.e. so-called adhesive layers or tie layers, may be applied as co-extruded, adjacent layers for optimal interior polymer properties and bonding properties.

In another preferred embodiment, the barrier-coated cellulose-based substrate is laminated to the bulk layer by an intermediate bonding layer from a composition comprising a water-dispersible binder, such as selected from the group consisting of acrylic polymers and copolymers, polymers and copolymers of vinyl acetate and/or vinyl alcohol, biobased binders, such as starch-based binders, binders based on cellulose or cellulose derivatives and binders based on other polysaccharide derivatives, applied, at an amount from 1 to 6 g/m², dry weight.

The barrier-coated cellulose-based substrate may thus alternatively be laminated to the bulk layer by wet application of a dispersion of an aqueous adhesive composition comprising an adhesive polymer binder onto one of the web surfaces to be laminated and pressing the two paper webs together while they are forwarded through a lamination roller nip, thus providing a laminated structure by wet lamination. The moisture of the aqueous adhesive composition is absorbed into the fibrous cellulose network of the two paper layers, and partly evaporating with time, during the subsequent lamination processes. There would thus be no need for a forced drying step. The barrier-coated cellulose-based substrate may thus be laminated to the bulk layer by from 0.5 to 6 g/m², such as from 1 to 6 g/m², such as from 1 to 5 g/m², dry weight, of an interjacent bonding composition comprising a binder selected from the group consisting of acrylic polymers and copolymers, starch, starch derivatives, cellulose derivatives, polymers and copolymers of vinyl acetate, polymers and copolymers of vinyl alcohol, copolymers of styrene-acrylic latex or styrene-butadiene latex or adhesive bio-latexes. For best possible environmental and sustainability profile, adhesive binders originating from plants or non-fossil sources are preferred.

Such a low amount of an interjacent bonding composition is only possible to apply by aqueous dispersion or solution coating of a polymer binder, and is not possible to apply by extrusion coating or extrusion lamination of a single-layer polymer melt due to the nature of the molten-layer extrusion process. Since the surfaces of the layers to be laminated together are both made of cellulose, aqueous wet lamination is made by the absorption of the aqueous medium into the respective cellulose layers, and thus a thin and dry bonding layer at the interface between the two layers may be formed.

Suitable materials for the outermost and innermost liquid-tight layers may be thermoplastic polymers, such as polyolefins such as polyethylene and polypropylene homo- or co-polymers, preferably polyethylenes and more preferably polyethylenes selected from the group consisting of low density polyethylene (LDPE), linear LDPE (LLDPE), single site catalyst metallocene polyethylenes (m-LLDPE) and blends or copolymers thereof. Such thermoplastic polymers also have the advantage of being readily weldable, i.e. heat sealable, to the same or similar polymers and to other materials with thermoplastic behaviour. According to an embodiment, the outermost heat sealable and liquid-tight layer may be an LDPE, while the innermost heat sealable, liquid-tight layer may be a blend composition of m-LLDPE and LDPE for optimal lamination and heat sealing properties.

The outermost layer may be merely protective towards liquid and dirt, such that any sealing of the outside surface to another surface or item, such as an opening device or the like, will be carried out by an additional glue or hot melt. The first outermost protective material layer or coating may thus be a polethylene-based polymer, applied at from 1 to 12, such as from 1 to 10, preferably at a low amount from 1 to 8, such as from 1 to 6 g/m², dry weight. It may be applied as a dispersion coating layer.

The same thermoplastic materials, as listed regarding the outermost and innermost layers, such as polyolefins and in particular polyethylene-based materials, may also be suitable in bonding layers in the interior of the laminated material, i.e. between a bulk or core layer, such as paper or paperboard, and the barrier-coated cellulose substrate. The thermoplastic bonding layer may for example preferably be a polyethylene layer, such as a low density polyethylene (LDPE) layer.

The second innermost layer of the liquid tight, heat sealable material may thus be a polyolefin, preferably a blend of low density polyethylene, LDPE, and metallocene-catalysed (using a single-site or constrained-geometry catalyst), linear low density polyethylene, m-LLDPE. This is the type of polymer most used today for the innermost layer, for best balanced liquid tightness and heat sealability properties, and which generates best possible heat seal integrity of heat sealed packaging containers. By choosing the composition of this layer carefully, the amount of polymer in this layer may be optimised to be as low as possible while still producing strong and reliable packages filled with product.

Accordingly, the second innermost liquid tight, heat sealable material layer comprises a polyethylene polymer which has group consisting of low density polyethylene, LDPE, linear low density polyethylene, LLDPE, and blends thereof.

Preferably, the second innermost liquid tight, heat sealable material layer has a density lower than 0.93 g/cm³, such as lower than 0.92 g/cm³, such as lower than 0.915 g/cm³.

Preferably, the second innermost liquid tight, heat sealable material layer has a major melting point from 88 to 110 °C.

Preferably, the second innermost liquid tight, heat sealable material layer comprises a blend of from 50-90 weight-% of a linear low density polyethylene catalysed by a metallocene-type catalyst, m-LLDPE, with from 10 to 50 weight-% of a low density polyethylene, LDPE.

The outer- and innermost, liquid-tight layers and the lamination layers in the interior of the laminate structure, do not normally and inherently add high barrier properties to migrating gas molecules or small molecules. Their purpose is to provide a direct barrier to water in liquid form from penetrating through to the cellulose-based bulk material and other paper layers. The liquid barrier layers also prevent water vapour from migrating to the cellulose to the extent that it gets wet, but are not capable of keeping the moisture content of the laminated structure at zero or at the low level of "dry" paper (which is at about 7-8 % in an environment at ambient temperature, i.e. at 23 deg C, and 50 % relative humidity, RH). The moisture content in the laminated carton material of a packaging container filled with liquid is usually rather high and migration through the material occurs, unless there is a further water vapour barrier included, such as an aluminium foil, a vapour deposited metallisation layer, other vapour deposition coating, inorganic material layer or other polymer material layer.

In a preferred embodiment, the load-bearing and load-distributing layer is adjacent and in direct contact with the second innermost liquid tight, heat sealable material layer. By such a layer configuration, the most cost-efficient and well-functioning packaging laminate is provided. Only three different polymer streams are needed, requiring as few extruders as possible, while yet combining all positive functionality and properties needed in an inside polymer multilayer portion, i.e. heat sealability, liquid-tightness, load-endurance (upon folding and straining), good adhesion to the barrier layer portion, as well as openability of the packaging laminate.

Preferably, the inside polymer multilayer portion further comprises a tie layer comprising an adhesive polymer adjacent and in contact with the barrier-coated, inner side of the cellulose-based substrate. This is advantageous in long-term packaging and storage of filled packages, to maintain adhesion between the inside polymer multilayer portion and the barrier layer surface of the barrier-coated cellulose-based substrate. In particular so, when the barrier surface is a metal surface, such as regarding an aluminium metallisation coating.

In a preferred embodiment, the laminated packaging material comprises at least one laminated opening hole in which a hole in the bulk layer is covered by the other layers of the laminated packaging material. The configuration of the inside polymer multilayer portion supports the membrane of the pre-cut, laminated hole better in heated operations, such as in lamination of the material and in heat sterilization in a filing machine, by its better thermomechanical resistance by including the load-bearing and load-distributing layer of LLDPE.

The method of making the laminated packaging material comprises lamination of the bulk layer, barrier layer, outermost layer, and innermost layers, and may also comprising coating of the barrier layer substrate layer with one or more of the barrier coatings. The layers of the laminated packaging material may be joined in any order.

In a preferred embodiment, the bulk layer and barrier layer are laminated, followed by application of the innermost layer and then the outermost layer (or less preferably followed by application of the outermost layer and then the innermost layer). This order is referred to as "LID" wherein L= lamination of paperboard to barrier layer by intermediate bonding layer; I = application of innermost layer to barrier layer; D (décor) = application of outermost layer onto paperboard. The less preferred alternative is referred to as "LDI".

Alternatively, the bulk layer may be initially joined to the outermost layer. This order is referred to as "DLI". This order is particularly suitable when the outermost layer is a dispersion coated thin layer. In this case, dispersion coating may follow printing of the bulk layer, as printing and dispersion coating are similar coating processes. Extrusion coating of the outermost layer is also possible. DLI is further suitable to protect the printed décor on the paperboard, such that it will not be scratched or scuffed or in the following lamination stations.

A laminated packaging material as described above may provide good integrity when transformed into filled packaging containers, by good adhesion between the adjacent layers within the laminated construction and by providing good quality of the barrier coatings as well as by the resilience of the inside polymer multilayer portion. Especially, for the packaging of liquids, it is important that the inter-layer adhesion within the laminated packaging material, as well as the oxygen gas barrier properties, is maintained also under wet packaging conditions.

A packaging container formed from a described laminated packaging material may be partly sealed, filled with liquid or semi-liquid food and subsequently sealed, by sealing of the packaging material to itself, optionally in combination with a plastic opening or top part of the package.

To conclude, robust and reliable heat sealed packages for liquid food packaging for long term shelf-life and storage may be obtained from laminated packaging materials comprising a barrier-coated cellulose-based substrate, as defined by the claims, thanks to the resilience of the inside polymer multilayer portion such that the oxygen barrier properties are preserved and the filled product is well protected during folding, forming and sealing of the packaging material.

### Examples and description of preferred embodiments

In the following, preferred embodiments of the invention will be described with reference to the drawings, of which:
Fig. 1 shows a schematic, cross-sectional view of an example of a laminated packaging material comprising a barrier-coated cellulose-based substrate and an inside polymer multilayer portion,
Fig. 2 is showing a schematic, cross-sectional view of an example of such a laminated packaging material, obtained by a different method,
Fig. 3a shows schematically a method, for dispersion coating a base coating composition or a gas barrier dispersion or solution onto a cellulose-based substrate,
Fig. 3b and 3c show respectively, schematically a method, for melt extrusiong lamination of two webs to each other and a method for melt (co-) extrusion coating of layer(s) of a thermoplastic heat sealable and liquid-tigth polymer onto a web sustrate, to form innermost and outermost layers of a packaging laminate of the invention,
Fig. 4 is showing a diagrammatic view of a plant for physical vapour deposition (PVD) coating of a metal or metal oxide onto a barrier-coated paper substrate, by using a solid metal evaporation piece,
Fig. 5a, 5b, 5c and 5d are showing typical examples of packaging containers produced from a laminated packaging material comprising a barrier-coated cellulose-based substrate according to the invention,
Fig. 6 is showing the principle of how such packaging containers may be manufactured from the packaging laminate in a continuous, roll-fed, form, fill and seal process,
Fig. 7a and 7b show results in a diagram from measurements of oxygen transmission, OTR, into a packaging container ("OTR Package") made from laminated materials, co-pending and comparative and according ato the present invention,
Fig. 8a shows results in a diagram from measurements of OTR after mono-axial folding of co-pending and comparative laminated materials to the present invention,
Fig. 8b shows results in a diagram from measurements of OTR after mono-axial folding of a laminated material of the present invention,
Fig. 9a, 9b and 9c show results from respectively maximum openability force, maximum energy and total energy, required for penetration with a paper straw through a pre-cut, laminated straw hole on a co-pending and comparative laminated material,
Fig. 10 shows the impact on OTR of different, co-pending and comparative coated configurations of the inside polymer multilayer portion on planar unfolded, as well as multiply monoaxially folded, panels,
Fig. 11 shows further results of the impact on OTR of different, co-pending and comparative coated configurations of the inside polymer multilayer portion on flat, unfolded, as well as multiply monoaxially folded, panels,
Fig. 12a, 12b and 12c show results from studying the quality and thickness of the inside polymer multilayer portion after biaxial folding on the same co-pending and comparative samples as tested in Fig. 10 and on a sample according to the present invention,
Fig. 13a shows the quality of the inside polymer multilayer portion on flat, uncreased and unfolded panels of the same co-pending and comparative sample materials as in Fig. 10 and 12a, as assessed by a Fischer HV5 Poroscope,
Fig. 13b shows the quality of the inside polymer multilayer portion on flat, uncreased and unfolded panels of a sample of the invention, in comparison to some of the co-pending and comparative materials, as assessed by the Fischer HV5 Poroscope,
Fig. 14a shows the quality of the inside polymer multilayer portion on flat, uncreased and unfolded panels of further co-pending and comparative material samples, as assessed by the Fischer HV5 Poroscope,
Fig. 14b shows the quality of the inside polymer multilayer portion on flat, uncreased and unfolded panels of further material samples of the invention, as assessed by the Fischer HV5 Poroscope,
Fig. 15a and 15b show the quality of the inside polymer multilayer portion on flat, uncreased and unfolded panels of further co-pending and comparative material samples, as assessed by the Fischer HV5 Poroscope,and
Fig. 16 shows results from studying the quality of the inside polymer multilayer portion after biaxial folding on the same co-pending and comparative samples as tested in Fig. 11.

### Measurement methods

### OTR Package

The Oxygen transmission rate of packages (filled, emptied and dried) was measured according to ASTM F1307:2020 (and ASTMF1927:2020, with some technical baseis also in ASTM D3985:2017 for the system set-up and any higher-moisture conditions, such as 50 % RH), at 0.2 atm (surrounding air containing 21 % oxygen). The measurement unit is cm³/package/24h.

The package is mounted on a special holder; inside the package nitrogen is purged; the outside of the package is exposed to the environment surrounding the instrument. When oxygen permeates through the package into the nitrogen carrier gas, it is transported to the coulometric sensor. The sensor reads how much oxygen leaks into the nitrogen gas inside the package.

### OTR on Folding Robustness

OTR on folding robustness is determined herein by cutting the laminated materials to round standardized area samples having a diameter of 104 mm for testing in a PreSens (from Germany) OTR permeation cell, equipped with the sensor type PSt9. The accumulated concentration of permeated oxygen into nitrogen gas was measured by fluorescence over time and plotted as oxygen transmission rate provided in the unit cm³ per sample and 24 hours, after normal conditioning of the samples. Folding of the samples was made in a folding rig, along a machine direction (MD) crease line, outside to outside, to an angle of 165 degrees, for inducing maximal stress, at a determined speed and by mechanized, high-precision repeatable folding, to resemble conditions in a filling machine. Each folding operation stresses the material in exactly the same way, which makes folding experiments and subsequent OTR determinations repeatable and comparable.

All samples were thus measured at 23°C, 50% RH on the test gas side and dry nitrogen on the barrier side. Values were calculated from the slope of an increase in oxygen concentration. The unit for calculated OTR is expressed in cm³/sample and 24 h with 21% Oxygen.

### Straw Puncture Test for Openability

The following test method is used to determine the maximum force needed to puncture or first penetrate the membrane of a laminated straw hole (also referred to as "PPH", pre-punched hole in the paperboard).

The tested laminated materials were provided during manufacturing and converting operations with pre-cut, laminated straw holes, one per package unit. Thus, the bulk layer of paper or paperboard was pre-cut at intervals to obtain one small hole per package unit, having a diameter of 6 mm, suitable for an opening for a drinking straw. In the subsequent lamination operations, to form the laminates that were tested herein, these straw holes were overlaminated, i.e. covered by all the other layers of the laminate. Within the paperboard hole area, the outermost LDPE layer was adhered to the LDPE intermediate bonding layer to form a laminated membrane together with the barrier layer and innermost layer. A standard compression testing machine (Zwick Roell) was used to evaluate the maximum force required for opening the membrane by penetration with a slant-cut paper straw of diameter about 5 mm.

The test was performed with the tip orientation in both MD and CD, close to the paper board edge of the PPH. MD means that the direction of the inclination of the slant is perpendicular to the machine direction and CD means that the direction of the inclination of the slant is in alignment with the machine direction of the laminated material.
The test was executed on flat laminated material. A pre-load of 0.1 N was used. Speed: 200 mm/ min.The PM and the straws were pre-conditioned in 23°C and 50% RH prior to testing. The paper straws, which had a diameter of 5 mm, were cut to a length of 70 mm.

### "Holiday" testing on Biaxially folded material

The negative effects from further folding was studied and tested based on the principles of ASTM D5162-21. Such testing is generally referred to as "holiday testing".

The described method in part B of ASTM D5162-21 was adapted for testing on a flexible packaging material composed of thin polymer layers applied on a conductive layer. By exposing the material to increased high voltages from 0 to 20 kV, spots or areas with thinner material or defective polymer coating are indicated as voltage breakthroughs at lower voltage than the surrounding, thicker and fault-free polymer coating material.

The lowest voltage level at which a "breakthrough or "contact" occurred was thus noted and reported for each sample.

Samples of laminated packaging materials were flat folded in a standardised manner (folding rig) first in one direction by 180 degrees, inside towards inside, and then a second time across and in a perpendicular direction to the first fold by 180 degrees, with a consistent geometry. The double-folded area of the packaging material was subsequently studied regarding "thinning" of the polymer layers inside of the metallisation layer, i.e to see whether the polymer inside layers had been weakened, normally by becoming thinner, at potential, sensitive points of the folded area, by the biaxial folding operation.

The method may be used for detecting weaknesses in the inside polymer layers at any area of the packaging material, and in the present method thus at areas where the laminated packaging material has been double-folded.

Thus, to evaluate the remaining thickness of the inside polymer layers, this test method was used, and the voltage at break-through of the polymer layers was related to the polymer thickness that was remaining after bi-axial folding, before the high voltage was applied.

### Flat Panel Polymer Layer Defects

The quality of the polymer layers on the inside of the barrier-coated cellulose-based substrate, i.e. covering the metallization layer, was tested on planar, unfolded material corresponding to wall panels of a fold-formed packaging container, by an instrument referred to as a "poroscope" of the type "Fischer HV5" from Helmut Fischer GmbH, Germany, which is a portable pore test instrument with a roller electrode and continuously adjustable test voltage from 0.8 to 5 kV. The instrument tests the electrical breakthrough resistance of the polymer layers applied onto a metallic barrier layer or coating in a laminated packaging material, at exposure to high voltages between 0.8 and 5 kV, to predict package integrity concerning polymer layer quality. Such polymer layers are positioned on the inside of the metallic layer in a packaging laminate, i.e. towards the direction of the interior of a packaging container formed from the laminated material. At this position, it is important that the layers are of good quality, i.e. have even thickness over the full area of the laminated material at all positions, and fulfil a specified minimal thickness. A small defect initiation, in the polymer layers, such as a thinner coated area or point, or a pinhole, may be seen as a potential risk at later stress at exposure to severe conditions, and may be detected according to this method as a voltage breakthrough occuring earlier at the position of the initiation than elsewhere on the laminate. This test is also a modification of the official standard ASTM D5162-21, thus adapted for testing on a planar flexible packaging material. Such testing is may generally be referred to as "holiday testing". By using the Fischer HV5 instrument and increasing the voltage applied in steps, it will be seen at what lowest voltage level, i.e. earliest "stress level", the laminated packaging material will show a "breakthrough" or "contact". The material should be kept at climate conditions holding 0-40 °C and 0-60 % RH, to be free from any condensate on the metal surface. The results are reported as the percentage of tested package samples exhibiting a contact at different voltage levels.

Grammages of paper substrates were determined according to the official test method of ISO 536:2019 by the unit g/m², while thickness and density were determined according to ISO 534:2011, by the units µm (m) and kg/m³, respectively.

Thickness measurements of coated polymer layers on paper and in laminate strcutures may be measured and estimated by taking sliced section samples of the structure and studying them in a SEM microscope. The slicing may be done using e.g. a cryo microtome.

Optical density of a metallization coating is measured in production by means of a densitometer, i.e. an instrument (such as from Macbeth, Tobias or similar), which uses the principle of diffuse light transmission. The instrument is suitable for measuring the optical density values of films coated with aluminium metallization. The accuracy and precision of the measurements is high and about +/- 0.2 OD and about +/-0.01 OD, respectively, within a measuring range from 0 to 6.60 OD. In lab measurements, a spectrophotometer may alternatively measure the light transmission over the full visible spectrum (380-800 nm). The optical density is calculated from the light transmission (T, also referred to as I₁/I₀ i.e. ratio of incident light to transmitted light) value at 560 nm, according to a formula OD= -log₁₀(I₁/I₀) and the values obtained are equally accurate (+/- 0.2 OD) and comparable to light transmission densitometer values.

Surface roughness is measured according to ISO 8791-4.

Gurley porosity is measured according to Tappi T460 om-02.

### Examples

### Experiment 1a (co-pending comparative information)

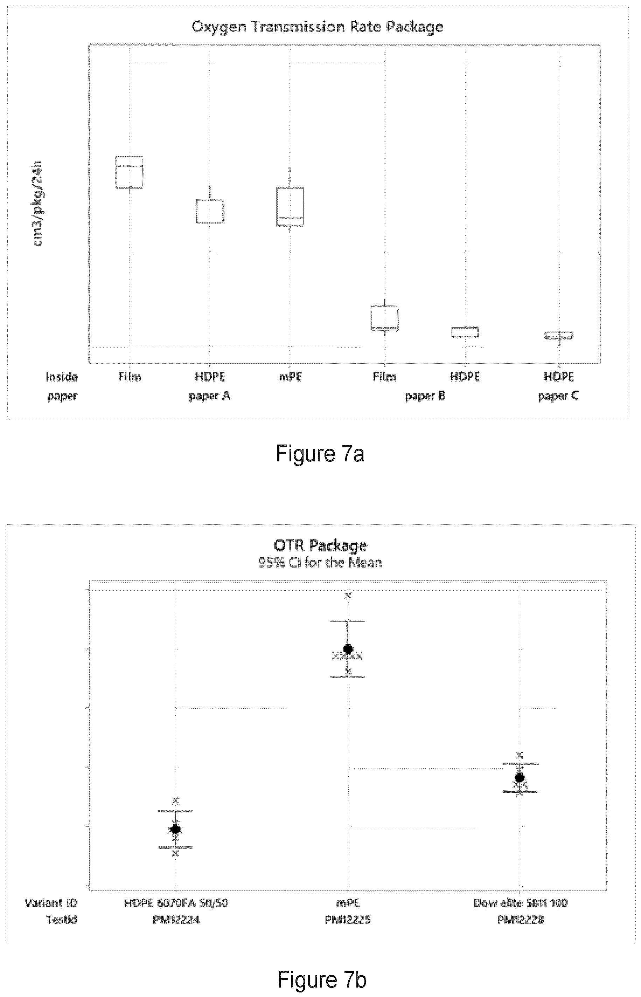

In Fig. 7a, the OTR of three comparable packaging laminates, differing only by comprising different paper barriers A, B and C, are shown. Each of these laminates further had different inside polymer layer configurations as shown. The barrier-coated papers of B and C had better total oxygen barrier materials than the one of barrier-coated paper A and provide thus altogether a better performance, i.e. a lower level of Package-OTR.

The principal layer structure of the laminated packaging materials was:
// LDPE (12 g/m2) / paperboard 80 mN CLC Duplex BKG/ LDPE (15 g/m2)/ paper substrate/ 2x 1.0 g/m² PVOH (total 2.0 g/m²) / metallization (OD∼2.0)/ inside //
(regarding the paper C laminate, the dry coating weight of PVOH was 2.8 g/m²)
wherein

| "Inside" is either of: | |
|---|---|
| "Film": | /EAA (6 g/m²)/ LDPE (13 g/m²)/ cast LLDPE film// |
| "HDPE": | /EAA (6 g/m²)/ /HDPE (15 g/m²)/ blend of mLLDPE 70 wt% + LDPE 30 wt% (14 g/m²)// |
| "mPE": | /EAA (6 g/m²)/ blend of mLLDPE 70 wt% + LDPE 30 wt% (29 g/m²)// |

The LDPE grade 19N730 from Ineos was used in all layers.

The "mPE" layer was made from a blend grade Elite 5800 from Dow, corresponding to a blend of about 70 wt-% mLLDPE and about 30 wt-% LDPE.
The EAA grade used was Primacor 3540 from Dow.
The LLDPE film was a cast bi-oriented LLDPE film of 18 µm thickness and had a surface weight of 17 g/m².
The HDPE grade was Dowlex 2006G from DOW.

Each of the barrier-coated paper substrates A and B in Figure 7a, were coated with barrier coatings according to the following.

Two subsequent coating steps with aqueous PVOH dispersion (of Poval^{™} 6-98 from Kuraray at about 10 weight-% of solids content), were applied onto the top side of the base-coated paper substrates, by means of roller coating, each with a subsequent evaporation drying operation at a substrate surface temperature kept below 90 °C, to provide in each coating step about 1.0 g/m² of dry weight coating, thus altogether about 2.0 g/m² of PVOH, dry weight. The thus PVOH-coated paper substrates were susequently PVD coated with a thin metallisation coating to an optical density of about 2.0.

The barrier-coated paper substrate C was instead 4 times consecutively coated with 0.7 g/m² of the same PVOH (Poval^{™} 6-98 from Kuraray at about 10 weight-% of solid matter) with intermediate and final drying steps at a substrate surface maintained below 90 °C. The thus PVOH-coated paper substrates were subsequently PVD coated with a thin metallisation coating to an optical density of about 3.5.

Lamination of the materials was carried out in a pilot-scale lamination line. The lamination speed was about 100 m/min.

The Duplex CLC paperboard was a clay-coated paperboard of a conventional type. The barrier-coated side of the paper substrate was directed in the laminated structure towards the inside, i.e. corresponding to the inside of a packaging container to be manufactured from the laminated material.

Laminated packaging materials were produced by means of melt extrusion lamination at 310 °C, with about 15 g/m² of an interjacent bonding layer of a conventional low-density polyethylene, LDPE, thus laminating the paperboard to the back side of the respective barrier-coated paper. The outside of the paperboard was melt extrusion coated with about 12 g/m² of LDPE. The gas-barrier coated paper substrates were thus melt extrusion coated or laminated on their opposite, barrier-coated, inner side with the different inside polymer multilayer configurations.

Packaging containers were made from the respective laminated materials in a Filling Machine of the type Tetra Brik^{®} A3/CF and the package size was 200 ml "Slim" (200S).

The filled packages were emptied, purged with nitrogen and the transmission rate of oxygen entering into the individual packages was measured according to ASTM F1307-14, at 0.2 atm.

The results were thus as shown by the diagram in Fig. 7a.

The OTR of packaging containers made from comparable laminates having a same barrier-coated paper is thus well maintained at a similar low and good level, regardless whether using inside a pre-manufactured cast LLDPE film, or a coextrusion-coated inside comprising a blend of metallocene-catalysed m-LLDPE and LDPE, as the heat sealable innermost layer. When including an interior load-bearing layer comprising an HDPE or MDPE in the inside polymer layer structure, instead of the pre-manufactured film, together with an innermost layer of the same mLLDPE and LDPE blend, the OTR of the packages remains very good or may even be further improved.

It has been found that a load-bearing and resistant inside polymer multilayer portion is needed in particular concerning less advanced paper substrates, which are less flexible and more prone to cause cracks in the thin barrier coatings, as the cellulose material is breaking upon folding of the paper. The use of a specific, expensive, pre-manufactured, cast LLDPE film has been the first solution to produce folding-resistant packages. The structure of the laminated packaging material according to the first aspect has proven, however, to be an excellent, cost-effective solution that maintains OTR properties well also after fold-forming the material into a package. Moreover, the inside polymer multilayer portion can also stay intact per se, without creation of thinnings or other defects of the polymer layers.

The load-bearing inside polymer multilayer portion including a load-bearing layer comprising HDPE or MDPE is subject to a co-pending application.

It has, however, also been found in connection to the above development, that a selected type of extrusion-grade, linear low-density polyethylene, "EC-LLDPE", having a melting temperature, Tm, of 124 °C, works even better from some aspects, although by different mechanisms and by means of slightly different sub-properties. Such improvements have, however, not been observed earlier when testing conventional LLDPE grades for (co-) extrusion coating, having lower melting temperatures, Tm, such as 110 degrees C, or lower, as conventionally used for an inside, or innermost, heat sealable layer.

### Experiment 1b

In this experiment, similar laminated packaging materials were made by the same methods and materials having the barrier-coated paper substrate A, and filled packaging containers of the same type were made in the same way. The principal layer structure of the laminated packaging materials was thus:
// LDPE (12 g/m²) / paperboard 80 mN CLC Duplex BKG/ LDPE (15 g/m²)/ paper substrate A/ 2x 1.0 g/m² PVOH (total 2.0 g/m²) / metallization (OD-2.0)1 inside //
wherein

| "Inside" is either of: | |
|---|---|
| "HDPE": | /EAA (6 g/m²)/ /HDPE 50 wt% blend with 50 wt% LDPE (15 g/m²)/ blend of mLLDPE 70 wt% + LDPE 30 wt% (14 g/m²)// |
| "mPE": | /EAA (6 g/m²)/ blend of mLLDPE 70 wt% + LDPE 30 wt% (29 g/m²)// |
| "EC-LLDPE": | /EAA (6 g/m²) / Elite 5811 from Dow 100 wt% (15 g/m²)/ blend of mLLDPE 70 wt% + LDPE 30 wt% (14 g/m²)// |

The LDPE grade 19N730 from Ineos was used in all layers.
The "mPE" innermost, heat seal layer was made from a blend grade Elite 5800 from Dow, corresponding to a blend of about 70 wt-% mLLDPE and about 30 wt-% LDPE.
The EAA grade used was Primacor 3540 from Dow.
The HDPE grade was Rigidex 6070FA from Ineos.

The filled packages were emptied, purged with nitrogen and the transmission rate of oxygen entering into the individual packages was measured according to ASTM F1307-14, at 0.2 atm, in the same manner. The results are presented in the diagram of Fig. 7b, and show that the laminated material having an inside polymer multilayer portion with an intermediate, load-bearing layer of a blend of HDPE and LDPE at 50:50 weight ratio provides a better, i.e. lower, OTR of a fold-formed, emptied packaging container than a corresponding laminate having a conventional inside polymer multilayer portion. The inventive laminate sample instead including an intermediate, load-bearing and load-distributing layer of the EC-LLDPE, i.e. comprising 100 wt% of Dow Elite 5811, also provides significantly better OTR than the laminate having a conventional inside polymer multilayer portion, however slightly worse OTR than the laminate with a load-bearing HDPE blend layer. Altogether, thus, the special EC-LLDPE load-bearing and load-distributing layer provides for good packaging containers, that promote a well kept oxygen barrier property of the barrier-coated paper-based material.

### Experiment 2a (co-pending comparative information)

To further test the ability of a laminated material to endure fold-forming in a filling machine, the laminated materials were exposed to mono-axial folding, unfolding and re-folding multiple times in a folding rig, after which the OTR is measured over the planar, material having one such unfolded fold. The folding operation is repeated several times to test the robustness of the material to induce "folding exhaustion". This is a very important aspect of folding robustness of a non-foil (i.e. no aluminium foil) laminated liquid carton material comprising a barrier-coated paper substrate, and the method is measuring to what degree the inside polymer layers can protect the paper barrier materials.

The ability of the inside polymer multilayer portion to prevent cracks from forming in the paper substrate upon folding, or at least to reduce the size of any formed cracks, may also be studied by optical microscopy or by a magnifying glass on the metallic barrier coating.

For studying the appearance of "thinning defects" in the inside polymer multilayer portion, X-ray tomography and microtome section-cutting and light microscopy may be needed
It seems that an inside polymer multilayer portion having a higher and appropriate tensile modulus can better withstand tension such that its thickness remains unchanged when stretched over a fold. Such polymer layers can counter any appearing cracks in the folded paper to prevent them from opening up further, which also prevents cracks in the barrier coatings and thus contributes to better oxygen barrier properties. Altogether, it seems the structure becomes more robust and load-bearing towards folding forces.

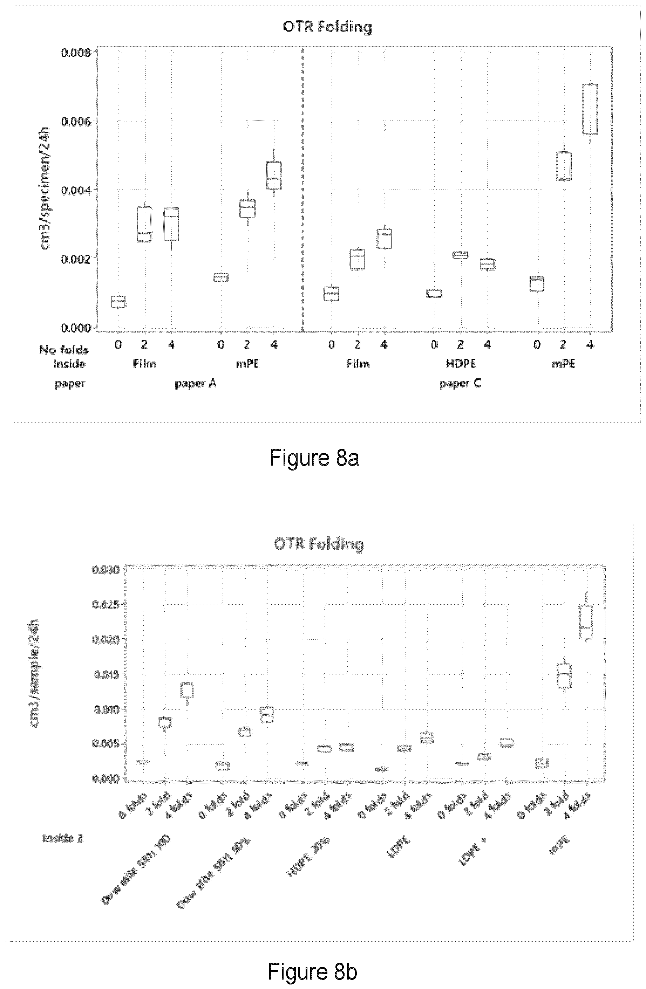

In Fig. 8a, the results of so-called "OTR folding robustness" tests are shown, regarding a laminate having paper A as the barrier-coated paper substrate and an inside cast film of LLDPE, as well as one of the improved paper barriers C, with each one of the above discussed configurations of inside polymer layers. The laminated materials were folded and unfolded multiple times and the OTR was measured after two and four folding repetitions.

Surprisingly, the folding robustness of the laminated paper C material seems to become even better when applying a coextrusion coated HDPE layer adjacent the innermost m-LLDPE blend layer, than when using the cast premanufactured LLDPE film as the innermost layer.

From the results with paper barrier A, it may be concluded that when using the cast premanufactured LLDPE film as the innermost layer, there is a significant improvement in comparison to when merely using an inside polymer multilayer portion having a single layer of a blend of 70 wt% mLLDPE and 30 wt% LDPE.

The results show that both the film inside and the HDPE coextruded layer improved such folding exhaustion significantly, thus reducing the OTR loss in fold-shaped packaging containers.

It also shows that in the case of good inside configurations with a cast LLDPE film or a three-layer inside having an intermediate layer of HDPE, the importance of the initial barrier properties of the laminated paper barrier-coated papers (A and C) decreases. This means, that a good configuration of the inside polymer multilayer portion may compensate such that the total structure of the laminated packaging materials exhibit high robustness in folding operations and the barrier properties may be maintained along folding lines. This altogether indicates that merely extrusion-coated layer of HDPE is a very good material to form part of the inside polymer layers for paper barrier laminates, providing a slightly improved OTR folding robustness compared to inside polymers comprising a pre-manufactured LLDPE film. At the same time, in comparison to inside polymers with a pre-manufactured LLDPE film, the openability of the total packaging material will be improved by using only extrusion coated polymer layers in the inside polymer multilayer portion.

The configurations of the inside polymer multilayer portions tested in Fig. 8a all had a total polymer surface weight of about 35 g/m², having an innermost layer of a blend of 70 wt% mLLDPE and 30 wt% LDPE at 15 g/m² and an adhesion promoting layer of EAA polymer towards the barrier coatings of 6 g/m².

The three-layer co-extrusion coated inside polymer multilayer configuration having an intermediate layer comprising HDPE has thus proven to be a viable alternative to a pre-manufactured cast and oriented LLDPE film regarding inside polymer and paper barrier integrity of fold-formed packages.

### Experiment 2b

To understand the impact of inclusion of the selected EC-LLDPE layer (as defined in claim 1) instead of an HDPE layer, in the inside polymer multilayer portion, comparative measurements were also made on similar structures with the only difference of having the inside polymer multilayer portion comprising a load-bearing and load-distributing layer of an extrusion-coating grade of an LLDPE having a high melting point, above 115 °C, such as above 120 °C, specifically in this experiment with a Tm of 124 °C.

Thus, the comparable and inventive laminates were like in Experiment 2a, with an inside polymer multilayer configuration of three layers, i.e. /EAA 6 g/m2 / "X" 15 g/m2 / blend of 70 wt% mLLDPE and 30 wt% LDPE 14 g/m2 //

Where "X" was:
An extrusion-coatable, load-bearing and load-distributing and high-melting LLDPE, "EC-LLDPE" (Extrusion-coating type LLDPE) being Elite 5811 from Dow,
"EC-LLDPE 50%" (the same EC-LLDPE in blend with 50 wt-% LDPE),
"HDPE 20%" (HDPE in blend with 80 wt-% LDPE),
"LDPE",
"LDPE+" (meaning that the grammages of the three layers including a layer of LDPE were 6/ 20/ 18/) and
"mPE" (meaning a blend of 70 wt% mLLDPE and 30 wt% LDPE).

The LDPE used was Ineos 19N730, the EAA was Primacor 3540 from DOW, the HDPE was Dowlex 2006G from DOW and the EC-LLDPE was thus Elite 5811 from DOW.

From Fig. 8b, it can be seen regarding mono-axial and repeated folding over a crease line in the paperboard, that a conventional inside with only EAA and "mPE" heat sealing blend does not perform very well, which is part of the problem underlying the invention, whereas the substitution of the middle mPE layer with a conventional extrusion grade LDPE, improves the folding resistance of the total inside. When increasing the polymer surface weights to 6+20+18 g/m² (the sample called "LDPE+"), the monoaxial folding resistance or property is only slightly improved, why it may be concluded that merely increasing the amount of polymer in the coating layers is not very efficient. When substituting the middle layer to instead comprise 20 wt-% HDPE, i.e. a rather low amount, the improvement is similar. When substituting the middle layer with the selected "EC-LLDPE" instead, the results get worse again, which generally discourages to use such a linear low density polyethylene in comparison to using a middle inside layer of HDPE or LDPE polymer.

It was, however, further seen that when blending the EC-LLDPE with 50 wt % LDPE, the load-bearing property to mono-axial folding could be slightly improved.

### Experiment 3 (co-pending comparative information)

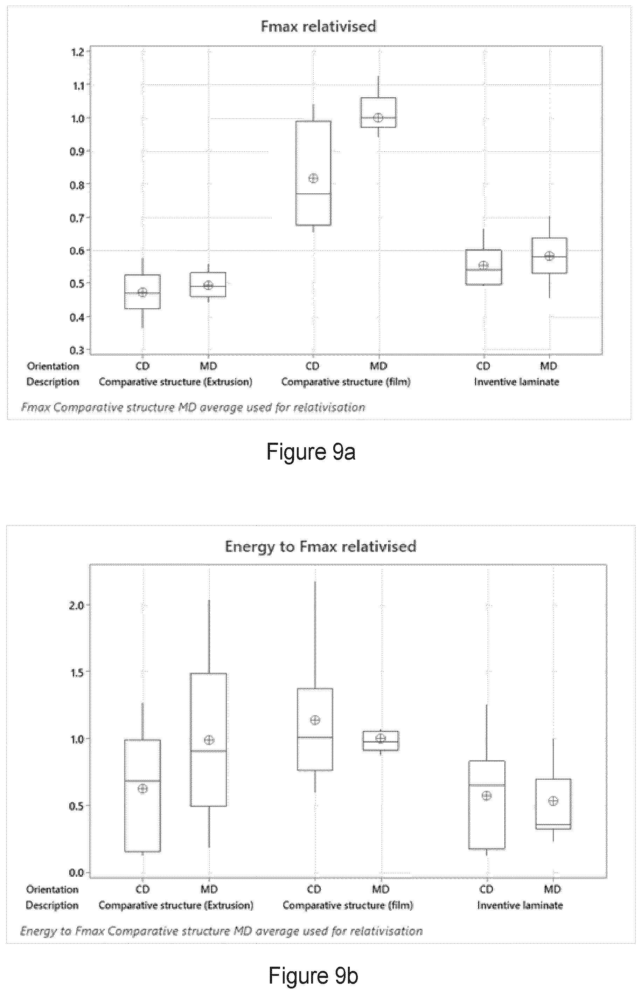

Fig. 9a-9c show how the openability of packaging containers manufactured from the laminated materials is secured by the laminated packaging material of the invention.

For the diagrams of figures 9a-9c, laminated materials of the paper barrier A as described above in conjunction with figure 7 were made, and laminated to different configurations of the inside polymer multilayer portion. The three types of laminates were tested regarding the maximum opening force, the maximum energy and the total energy needed, respectively, for penetrating a pre-cut, laminated hole for a drinking straw, with a paper straw having the same dimensions and stiffness properties in all tests, and the three variants were compared to each other.

Thus, for figures 9a-9c the following applies: Comparative structure extrusion = conventional co-extrusion coated two-layer inside (as used with aluminium-foil based carton materials) (adhesive polymer + innermost heat-sealable layer), i.e. /EAA (6 g/m2)/ blend of mLLDPE 70 wt% + LDPE 30 wt% (29 g/m2)// Comparative structure film = film inside = /EAA (6 g/m2)/ LDPE (13 g/m2)/ cast LLDPE film 17 g/m2 // Inventive laminate = co-extrusion coated three-layer inside with a load-bearing layer, i.e. /EAA (6 g/m2)/ /HDPE (15 g/m2)/ blend of mLLDPE 70 wt% + LDPE 30 wt% (14 g/m2)//

The polymers used were as above in connection to Fig. 7a.

Fig. 9a thus shows the relative maximum force needed for the paper straw to penetrate the laminated polymer membrane in the opening hole, which is pre-cut in the paperboard of the laminated packaging material. Measurements were in N. As expected, the force needed for the comparative material having the pre-manufactured cast LLDPE film as described above, was the highest, and when penetrating the material in the machine direction, MD, of the material. All values are represented as relative values in comparison to this value in the diagram in Fig. 9a. The inventive laminate thus brings the required force down to the normal level, only slightly higher than for a conventional two-layer inside laminate, as described above.

Fig. 9b shows the corresponding relative maximum energy required for the penetration of the paper straw, for the same three laminated materials. The energy required for the inventive laminate is the lowest in the machine direction, MD, and at the same level as the conventional laminate in the cross direction, CD. Measurements were in Nm.

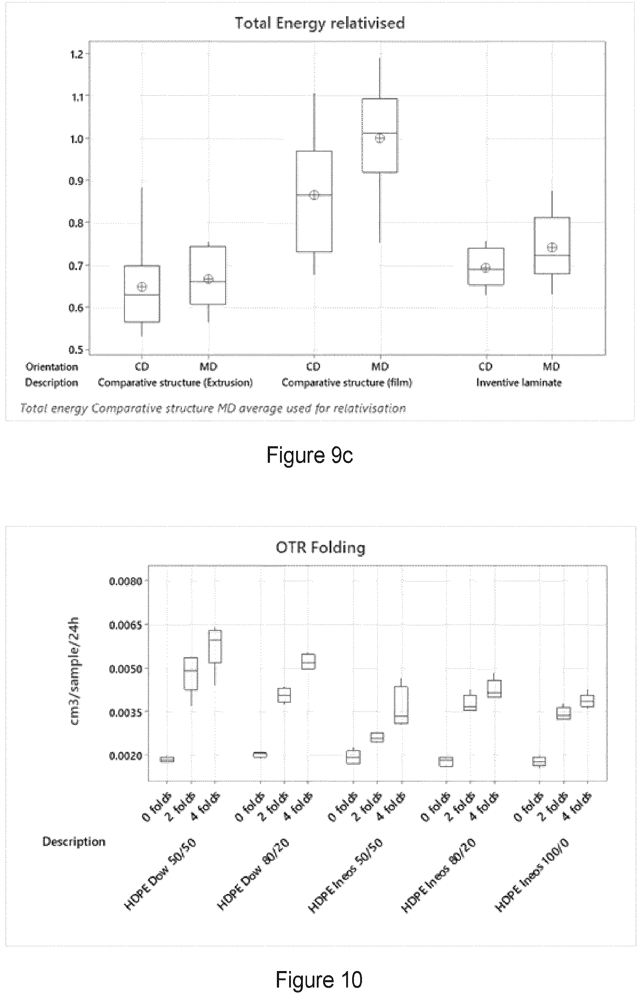

Fig. 9c shows the corresponding relative maximum energy required for the penetration of the paper straw, for the same three laminated materials. The total energy required for the inventive laminate is at the normal and accepted level, only slightly higher than for a conventional two-layer inside laminate, as described above. Measurements were in Nm.

In both Fig. 9b and 9c the results of the measurements are represented as relative to the value measured of the Comparative structure with a film, in the MD.

To conclude, the openability is significantly improved by the inventive laminate having a load-bearing extrusion-coated layer, in comparison to using a load-bearing, pre-manufactured LLDPE film, in the case of a straw opening or a pre-cut hole-membrane penetration opening mechanism. This is the thus case, while also the folding robustness is greatly improved by the extrusion-coated, load-bearing layer in comparison to the coextrusion-coated inside polymer multilayer portion having no such load-bearing layer.

To conclude, a corresponding laminate having an inside layer configuration comprising a pre-manufactured film may still perform better concerning other integrity aspects of the inside polymer multilayer portion, but since such pre-manufactured films have the significant drawback of providing laminated materials and packages that are more difficult to open, they are altogether a less desirable alternative to a conventional m-LLDPE blend inside configuration. Suitable pre-manufactured films are in addition not only significantly more expensive as such, but also add more costs to the lamination process which further adds to their disadvantages.

By the mere addition of an interior extrusion-coated, load-bearing layer comprising HDPE to the inside polymer multilayer portion, a cost-effective and better alternative has been found to the lamination of pre-manufactured films, because it is also better from openability point of view.

It is similarly expected that the inclusion of an extrusion-coated layer of the selected, load-bearing and load-distributing EC-LLDPE having a Tm of 124 degrees C in the inside polymer multilayer configuration will provide good openability properties, only maybe with slightly higher resistance to openability due to the more load-distributing property, but anyway significantly lower resistance than the comparative sample which includes an inside layer of a pre-manufactured, cast and biaxially oriented LLDPE polymer film. To conclude, an inside polymer multilayer, i.e. three-layer, configuration having a middle layer of the EC-LLDPE instead of the HDPE, will certainly also work better than the materials comprising a pre-manufactured film in the inside polymer multilayer portion.

### Experiment 4 (co-pending comparative information)

Further comparative tests regarding OTR folding robustness were made, wherein the layer of HDPE was substituted with a layer of a blend of HDPE with 20 or 50 wt% LDPE of a conventional extrusion coating grade, respectively. The total surface weight of the inside polymer multilayer portion was about 35 g/m² in this example and the principal laminate layer structure was:
// LDPE (12 g/m²)/ paperboard 80 mN CLC Duplex BKG/ LDPE (15 g/m²)/ thin paper substrate A / 2xPVOH (total g/m²) / metallization (OD∼2.0)/ /EAA (6 g/m²)/ /HDPE (or HDPE blend) (15 g/m²)/ blend of mLLDPE 70 wt% + LDPE 30 wt% (14 g/m²)//

Two grades of HDPE polymer was tested, i.e. Dowlex 2006G from Dow and RigidexFA from Ineos. The LDPE blending polymer was Ineos 19N730.

As shown in Fig. 10, it seems that from further experiments with blending the HDPE polymer of the load-bearing "HOPE" intermediate layer with up to 50 wt% LDPE, the OTR folding robustness test provided similar, good OTR results at low level values.

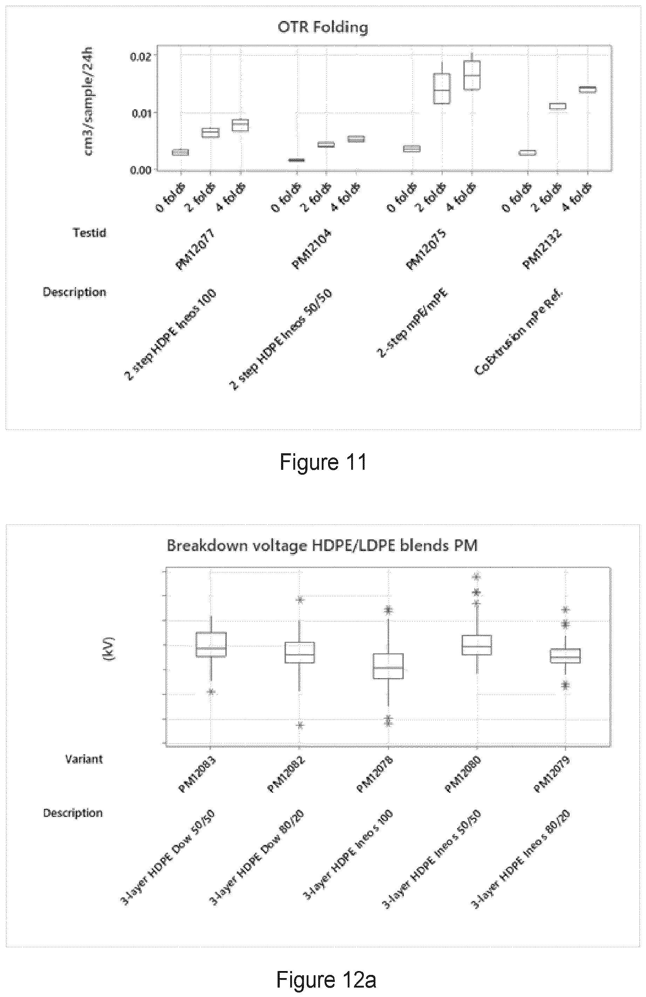

Consequently, the oxygen transmission after repeated monoaxial folding was maintained at a rather low level also when the amount of the HDPE polymer in the load-bearing layer was reduced, i.e. the blends within the range shown exhibit rather the behaviour of a three-layer HDPE-containing inside polymer multilayer portion, than the behaviour of a conventional, corresponding configuration with an mLLDPE-blend inside layer. This can be further seen in Figure 11 (Experiment 5).

### Experiment 5 (co-pending comparative information)

In a different test series, with results shown by the diagram of Fig. 11, similar laminates but having thinner inside polymer layer configurations were folded and tested in the same way as in the previous experiments, but the laminates were in total having a grammage of only about 26 g/m². In this test, the inside layers were applied by extrusion coating in two consecutive steps. For comparison, also the inside having only the m-LLDPE blended layer was tested to be extrusion coated in two consecutive steps.

The principal layer structure of the laminated packaging materials was:
// LDPE (12 g/m²)/ paperboard 80 mN CLC Duplex BKG/ LDPE (15 g/m²)/ paper substrate A/ 2xPVOH (total 2 g/m²) / metallization (OD~2.0)/ inside //
wherein

| "Inside" is e ither of: | |
|---|---|
| "HDPE": | /EAA (6 g/m²)/ /HDPE (10 g/m²)/ blend of mLLDPE 70 wt% + LDPE 30 wt% (10 g/m²)// |
| "mPE": | /EAA (6 g/m²)/ blend of mLLDPE 70 wt% + LDPE 30 wt% (20 g/m²)// |

The polymer grades used were as in the previous Experiment 4, and as indicated in the diagram, the HDPE grade was in this case the RigidexFA from Ineos.

The results in Fig. 11 show, that a two-step extrusion coating of the m-LLDPE blend inside layers would merely provide a similar result to the reference, single-step co-extrusion coating (i.e. same layer amount applied in one extrusion coating step only) of the mLLDPE blend inside of the same thickness, thus a two-step extrusion coating was not improving the OTR folding robustness of this inside layer configuration.

The laminates with the load-bearing, intermediate layer comprising HDPE on the other hand, when extrusion coated separately from the innermost mLLDPE blended layer, did provide a better OTR folding robustness than both the single-step and two-step extrusion-coated configurations of the mLLDPE blend inside.

It was thus seen that the use of an HDPE load-bearing layer improved significantly the OTR folding robustness at 2 and 4 times folding, respectively, in comparison to a reference inside sample having the conventional mLLDPE blend innermost layer alone.

It is also seen that the OTR folding robustness when the HDPE was blended with 50 wt% LDPE, and extrusion coated in two steps, would be even further improved, even if applied in thin layers.

Generally, a packaging laminate having a 3-layer inside with an intermediate layer of 100 % HDPE seems to provide packages having better Package-OTR as well as improved OTR folding robustness.

However, it has also been seen that the packaging laminate occasionally results in defective packages (formed in a filling machine), having low integrity robustness (including folding robustness), and in such single cases also the OTR for such failed packages will be too high. This is believed to occur due to the anisotropic properties of an extrusion-coated HDPE. It has thus been seen that a load-bearing layer comprising HDPE in a blend with LDPE can provide better overall folding robustness and less defective packages from this point of view, since the anisotropic behaviour is reduced when including a fraction of LDPE in the load bearing layer.

### Experiment 6a (co-pending comparative information)

A further sensitive area for defects which may cause occasional bad packages with high Package-OTR as well as bad integrity of the inside polymer layers, in addition to the mono-axial folding exhaustion along crease-lines in the paperboard, are package laminate areas of biaxial folding for the shaping into a cuboid packaging container.

A further important aspect of package integrity thus concerns to what extent the inside polymer layers are able to resist damage in bi-axial, double folding in the fold-forming of carton laminates. In order to specifically test this integrity property, the same laminated material samples having 35 g/m² inside polymers as tested in connection to Fig. 10, were folded 180 degrees first once and then a second time 180 degrees, further and perpendicular to the first fold, in a folding rig such that a constant geometry was applied to the double folds. A second fold upon and perpendicular to the first fold was thus formed, such that severe strain and stress acted on the inside polymer layers. After unfolding again, the planar material was tested to detect thinnings of the polymer layers on the inside of the barrier-coated paper by applying a lowest level of a high voltage to detect whether such thinnings or defects would allow breakthrough of the voltage applied. If not, the testing was continued by applying further increased voltages, until finally a dielectric break-through occurred. The voltage at breakthrough was noted.

The results are presented in Fig. 12a, which shows that an inside polymer multilayer portion with a load-bearing layer which is a blended layer of HDPE with from 20 to 50 wt % LDPE, does not allow voltage breakthrough until reaching a several kVolt higher applied voltage than what a pure corresponding HDPE layer of the same thickness did. This effect is seen regardless of which grade of HDPE is used.

Thus, in order to optimize folding robustness properties altogether, i.e. both from mono-axial crease-folding point of view and from biaxial folding point of view, it is advantageous to blend HDPE with LDPE, with an LDPE fraction from 20 to 80 wt-% LDPE, such as from 20 to 70 wt-%, such as from 20 to 60 wt-%, such as from 20 to 50 wt-%.

### Experiment 6b

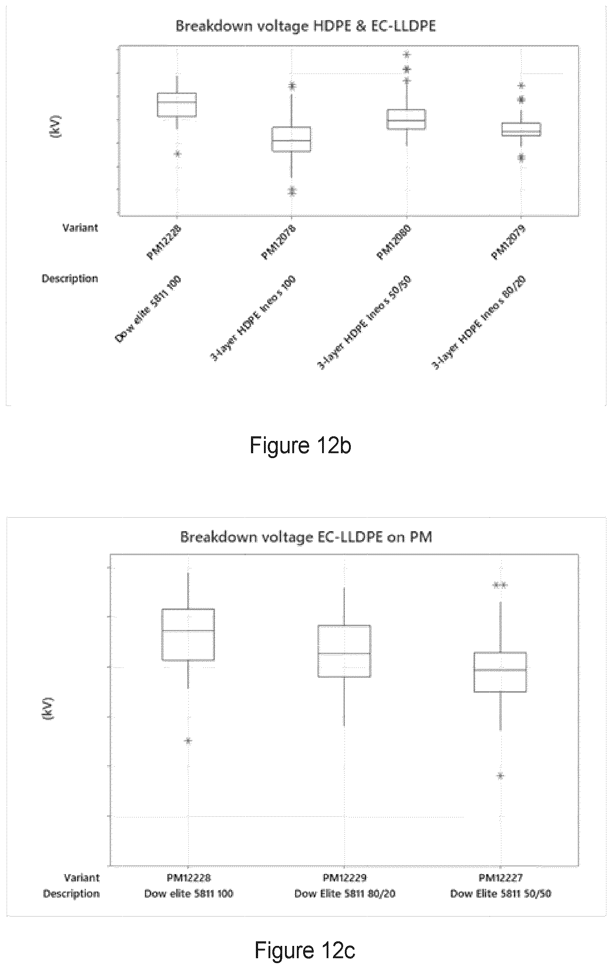

A comparison was made between the laminates of Experiment 6a with a similar packaging laminate having a 3-layer inside, but instead with an intermediate layer of 100 % of the EC-LLDPE (Elite 5811 from Dow) to the laminated materials listed under Experiment b above, and the result is shown in Fig. 12b.

As shown in Fig. 12b, the laminate configuration having an inside middle layer of the non-blended EC-LLDPE performs better than any of the HDPE laminate configuration samples, regarding biaxial folding. As bi-axial folding may cause damages both in the thin barrier coatings as well as in the inside polymer multilayer portion, this is an important property. The improved performance of a laminate having the load-bearing and load-distributing EC-LLDPE inside configuration during bi-axial folding may balance the lower performance regarding mono-axial folding OTR robustness thereof. When blending the EC-LLDPE with some LDPE, the mono-axial folding load-bearing and load-distributing effects are slightly improved, while regarding biaxial folding such blending is not favourable. This is further shown by the comparative test results as shown in Fig. 12c, i.e. clearly reducing the load-bearing and load-distributing effect of the inside polymer multilayer portion as the proportion of LDPE increases in the layer comprising the EC-LLDPE.

### Experiment 7a (co-pending comparative information)

A yet further important aspect of package integrity is to what extent the layers of the inside polymer multilayer portion, as such, are of a good quality, without defects and thinnings, such as pinholes, formed i.a. in the extrusion coating and lamination processes. This property is equally tested for breakthrough of a voltage applied at ramping steps towards higher values. The testing is performed by a so-called "Poroscope" of the type "Fischer HV5" on laminate samples having an inside polymer multilayer configuration thickness of about 26 g/m² surface weight. This test thus shows the integrity of the inside layers on areas of formed packaging containers, where the laminated material merely forms flat, uncreased and unfolded panels, i.e. corresponding to unfolded package walls on a packaging container.

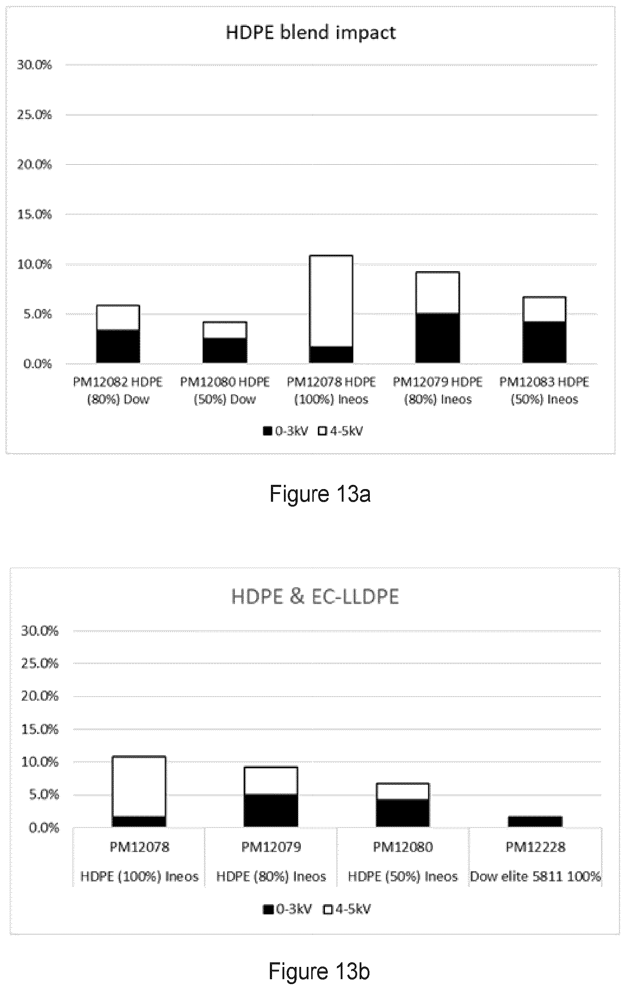

Fig. 13a shows the results for the same laminated material samples as in Fig. 12a and Fig. 10, thus with a surface weight of the inside polymer multilayer portion of about 35 g/m². The same trend is seen, i.e. the blended HDPE appears to provide better quality and total resilience of the inside polymer multilayer portion. A layer of 100 % HDPE seems to resist lower applied voltages better but would anyway risk breakthrough at higher voltages applied, and moreover in a higher number of packages. When blending the HDPE with 20 weight-% LDPE, the total number of weaknesses decreased and they decreased even further as about 50 weight-% of LDPE was part of the blend.

### Experiment 7b

As seen in Fig. 13b, the same laminated material, however having a similar inside polymer multilayer configuration with an inside middle layer of the EC-LLDPE, performs surprisingly well in the same Poroscope test. This result also balances further the lower performance in mono-axial folding robustness, such that a holistically further improved laminated material is obtained, exhibiting a load-bearing and load-distributing effect, as well as an improved layer quality, in its inside polymer multilayer configuration, to provide an overall improved package integrity relating to the inside polymer multilayer portion.

### Experiment 8a (co-pending comparative information)

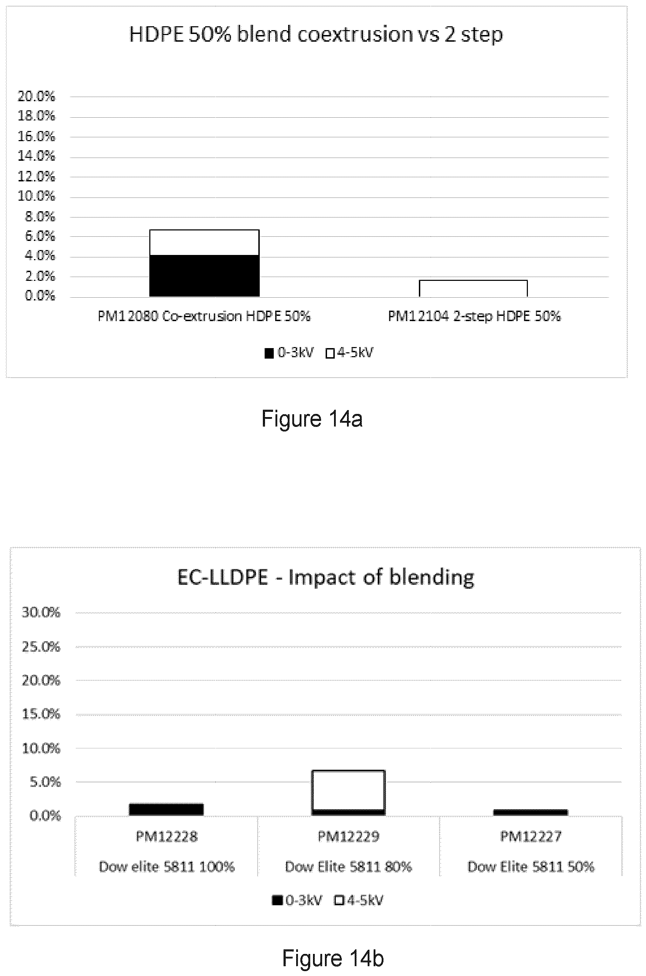

Further, the laminated materials having inside polymer multilayer portions applied by two-step extrusion coating were tested by the poroscope on planar, unfolded materials for the same reason. In Fig. 14a it can be seen, at 50% HDPE RigidexFA from Ineos in the inside intermediate layer, that two-step extrusion coating is better than a comparable coextrusion of all three layers in one single step. In addition, the two-step extrusion coated layers have a lower thickness (around 26 g/m² as compared to 36 g/m² of the single-step coextrusion coating sample), and would for this reason normally have been more sensitive to the applied voltage, but they proved on the contrary, and rather surprisingly, to be of better quality and more robust. In the two-step extrusion coating, the adhesive polymer, EAA, and the load-bearing, HDPE-containing layer were co-extrusion coated together onto the barrier-coated paper, and allowed to solidify, before the innermost, heat sealable layer is subsequently, separately extrusion-coated onto the solidified, previously applied coating layers.

### Experiment 8b

When in a corresponding manner blending the EC-LLDPE with LDPE and studying this planar coating layer quality, it resulted that blending with LDPE hardly made any difference, possibly only slightly if blending at 50 wt%. To obtain a best possible performance from the EC-LLDPE polymer, it is thus suggested not to blend it with LDPE, also from this point of view, as deducible from Fig. 14b.

### Experiment 9 (co-pending comparative information)

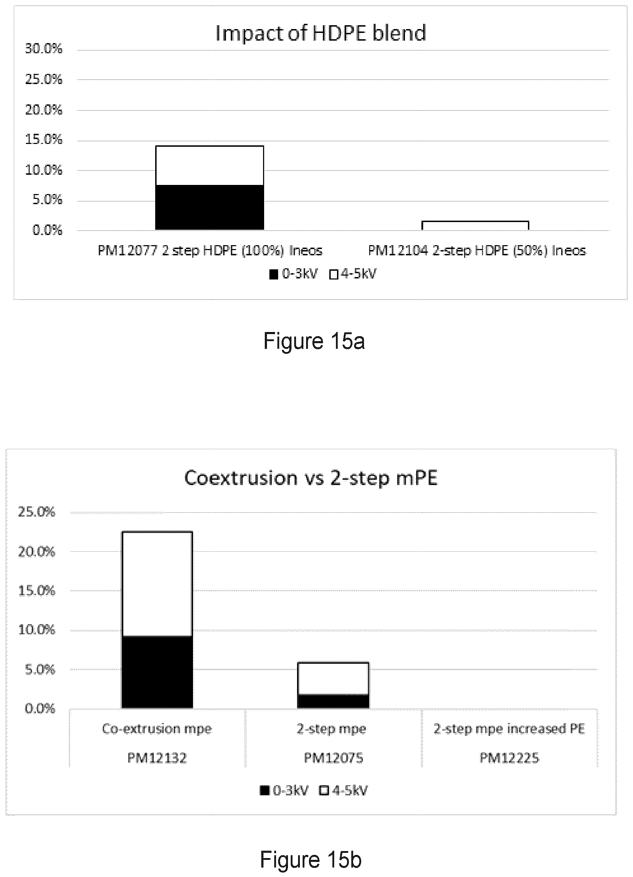

Fig. 15a shows further test results from poroscope measurements on flat, uncreased and unfolded laminated materials having an inside polymer mutilayer portion of a total surface weight of 26 g/m² instead. The sample PM 12077 with two-step extrusion coated polymer inside, having an intermediate layer of 100% HDPE RigidexFA from Ineos resulted in a higher number of voltage breakthrough occurences than the sample PM12104 with two-step extrusion coated layers and an intermediate layer of 50 wt-% HDPE in a blend with 50 wt-% LDPE.

A similar test was not performed of a method of extrusion coating the inside polymer three-layer configuration in two steps, having an intermediate layer of the selected EC-LLDPE, and it could thus not be verified whether even further improvements would be achieved by using the load-bearing and load-distributing EC-LLDPE, but it is believed very likely in view of the learnings from two-step extrusion coating of corresponding insides with intermediate, inside HDPE-comprising layers, as well as from two-step co-extrusion coating of corresponding conventional insides (i.e. having only EAA adhesion promoting layer and "mPE" heat-sealing blend layers). From the layer-integrity test results on flat, unfolded inside polymer layers of different types, in laminated materials as shown in Fig. 15b, it was thus seen that a two-step extrusion coating method was clearly advantageous in comparison to a single-step co-extrusion coating method. The surface coat weight of the inside polymer multilayer portions in Fig. 15b were about 26 g/m², except from the third sample (PM12225) wherein the surface weight was 35 g/m².

### Experiment 10 (co-pending comparative information)

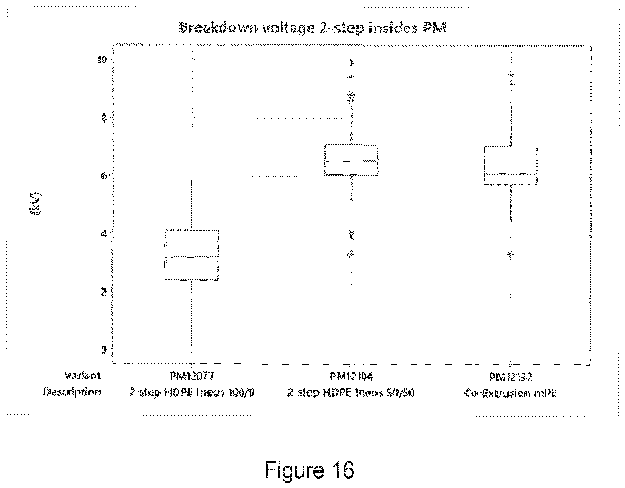

Fig. 16 shows that in the case of two-step extrusion coating of the inside polymer layers, an intermediate layer comprising HDPE RigidexFA from Ineos will perform better also upon biaxial folding and unfolding, in high voltage "holiday" testing as described in Experiment 6, when the HDPE polymer is blended with 50 wt-% LDPE, compared to a layer comprising 100 wt-% HDPE.

This means, that on average, a sample with 100 wt-% HDPE was broken through at half the total thickness of the polymer inside layers, compared to when the HDPE is 50 wt-% blended with LDPE. By blending HDPE and LDPE the result was thus surprisingly about 100 % better.

The laminate samples have in this comparative measurement a thinner inside polymer layer configuration, i.e. about 26 g/m², which more easily induces voltage breakthrough. The two-step extrusion-coated laminates would naturally be further improved at a higher total thickness of about 35 g/m².

The comparison to a reference laminate sample having an inside configuration with a blended inside layer with m-LLDPE and LDPE shows that blending the HDPE brings the inside integrity performance to be slightly better than reference level, regarding biaxial folding.

As stated previously, the performance regarding packaging laminate simple folding integrity is thus surprisingly improved by an extrusion-coated polymer inside configuration of layers having an intermediate layer comprising HDPE, in comparison to a layer configuration having only mLLDPE polymer at the same grammage. Upon biaxial folding, the HDPE-comprising inside polymer layer configuration performs better when the HDPE is blended with LDPE. The number of weaknesses or defects on the flat material polymer layers is further decreased, and thereby the integrity of the layers improved, when the inside layers comprising a load-bearing layer with HDPE are applied in a two-step extrusion coating operation.

This altogether indicates that HDPE or MDPE is a particularly good material to form part of the inside polymer layers for paper barrier laminates, also providing an even better OTR folding robustness than inside polymers comprising a pre-manufactured LLDPE film and further improving folding integrity when blending the HDPE with LDPE. At the same time, in comparison to inside polymers with a pre-manufactured LLDPE film, the openability of the total packaging material will be much improved by using only extrusion coated polymer layers in the inside polymer multilayer portion.

### Conclusions from Invention Experiments 1b, 2b, 6b, 7b and 8b.

A further invention has been realized, in comparison to, and alongside with, the subject-matter resulting from the above Experiments 1a, 2a, 3, 4, 5, 6a, 7a, 8a, 9 and 10, i.e. as proven from the above Experiments 1b, 2b, 6b, 7b and 8b.

From Experiment 1b, it can be concluded that good packaging containers may be obtained from a laminated material of the invention, exhibiting OTR package values on par with those for packages from corresponding laminates comprising a load-bearing layer comprising HDPE in their inside polymer multilayer configuration, and equally improved over corresponding laminated materials having the conventional inside polymer configuration.

As seen from Experiment 2b, the results of OTR on folding robustness from using a middle inside layer of the selected EC-LLDPE are significantly better than regarding a convention inside polymer configuration comprising only adhesive polymer and lower-temperature heat-sealable polymer layers, even if not quite as good as the comparative inside polymer multilayer configurations comprising a load-bearing layer of HDPE in Experiment 2a. A further slight improvement is seen when blending the load-bearing and load-distributing EC-LLDPE with LDPE.

From Experiment 6b it can be concluded that the inventive laminate performs significantly better upon biaxial folding, than the similar laminates having a load-bearing layer comprising any proportion of HDPE, as the middle layer in the inside polymer multilayer configuration. From fig. 12c it may be concluded that blending of the EC-LLDPE with an LDPE is not helpful from this point of view. It is believed that the extrusion coated layer of the EC-LLDPE having a high melting temperature is less load-bearing than an HDPE polymer, while still performing better thanks to better load-distributing properties as the polymer is strained without being weakened during biaxial folding operations.

From Experiments 7b and 8b it can be seen that also the flat, unfolded laminate of the load-bearing and load-distributing inside portion comprising the EC-LLDPE layer of the invention are excellent in quality in comparison to the corresponding laminates with an HDPE layer. Also for this property, there may be a slight advantage in blending the LLDPE with LDPE, but not high enough to outweigh the advantages from not blending as seen regarding the biaxial folding performance in Experiment 6b. Furthermore, from the research resulting in better properties seen i.a. for the co-pending subject-matter, it is conceived that further separate extrusion of the inside layers in at least two extrusion coating steps, with solidification of the prior layer before the application of the next layer, will further improve also the inventive laminated materials comprising the EC-LLDPE inside middle layer.

Because the inventive laminate has only extrusion coated polymer layers in its inside polymer multilayer configuration, the openability will be good, and significantly better than when instead laminating a pre-manufactured film to the laminate inside multilayer portion.

Thus, a well-functioning alternative configuration, or an even better functioning, configuration is provided, of the inside polymer multilayer portion for a heat-sealable and liquid-tight, laminated carton-based packaging material having a non-aluminium-foil, paper-based, barrier structure. The inside polymer multilayer portion as described in this invention improves the laminated layer integrity, as well as the fold-forming load-bearing and load-distributing properties in a better way, to protect and integrate such paper-based barrier materials in a laminated carton-based packaging material in an excellent manner.

Further, relating to the attached figures:

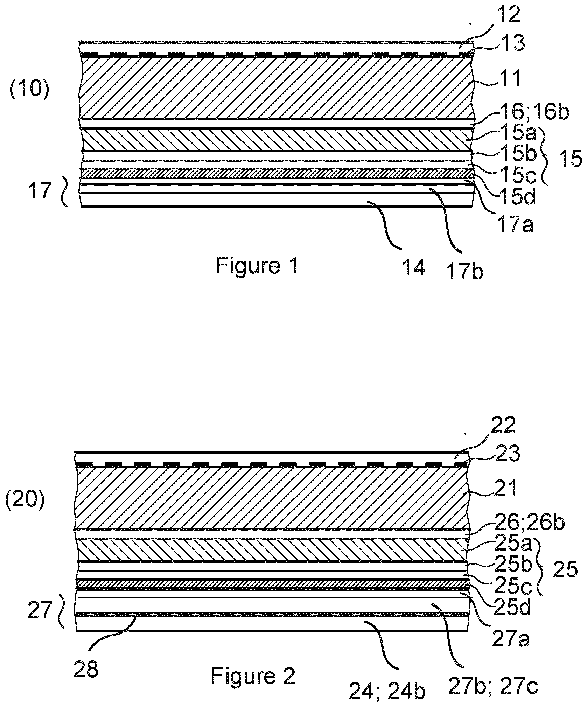

Fig. 1 shows a laminated packaging material 10 for liquid carton packages of portion pack format (such as to contain from 200 to 400 ml, in which the laminated material comprises a bulk layer 11 of paperboard, having a bending force of 80 mN and a grammage weight of about 200 g/m², and further comprising an outer liquid tight and heat sealable layer 12 of low density polyethylene applied on the outside of the bulk layer 11, which side is to be directed towards the outside of a packaging container produced from the packaging laminate. The layer 12 is transparent to show the printed décor pattern 13, applied onto the bulk layer of paper or paperboard, to the outside, thus informing about the contents of the package, the packaging brand and other information targeting consumers in retail facilities and food shops. The polyethylene of the outer layer 12 is a conventional low-density polyethylene (LDPE) of a heat sealable quality, but could also include further similar polymers, including LLDPE polymers. It is applied at an amount of about 12 g/m².

An innermost liquid tight and heat sealable layer 14 is arranged on the opposite side of the bulk layer 11, which is to be directed towards the inside of a packaging container produced from the packaging laminate, i.e. the layer 14 will be in direct contact with the packaged product. The thus innermost heat sealable layer 14, which is to form strong transversal heat seals of a liquid packaging container made from the laminated packaging material, comprises one or more in combination of polyethylenes selected from LDPE, and LLDPE produced by polymerising an ethylene monomer with a C4-C8, more preferably a C6-C8, alpha-olefin alkylene monomer in the presence of a metallocene catalyst, i.e. a so called metallocene - LLDPE (m-LLDPE).

The bulk layer 11 is laminated to the uncoated side (i.e. having no gas barrier coating applied) of a thin, barrier-coated paper substrate 15, by an intermediate bonding layer 16 of a low density polyethylene (LDPE). The barrier-coated paper substrate has a dispersion-coated, first oxygen barrier layer 15c of PVOH of about 2.0 g/m² applied onto the opposite, inner side of the paper substrate 15a, and an aluminium barrier deposition coating 15d, i.e. an aluminium-metallized layer, applied onto the dried surface the oxygen barrier layer 15c, by physical vapour deposition to an OD of about 2. In some embodiments when the paper substrate has a rougher or more absorbing top side (intended for coating) surface, a base coating 15b may be applied by means of dispersion coating before and to be positioned beneath the first gas barrier layer. The base coating may be e.g. be a smoothening coating of starch or a clay-coat, i.e a thick aqueous composition of a latex binder and rather high content of filler mineral particles, typically CaCO3 and/or kaolin clay. The intermediate bonding layer 16 of LDPE is formed by means of melt extruding it in the form of a thin polymer melt curtain between the two paper webs and thus laminating the bulk layer and the barrier-coated paper substrate to each other, as all three layers pass through a cooled press roller nip. The amount applied of the intermediate bonding layer 16 may be from 10 to 20 g/m², such as from 10 to 15 g/m².

The thus barrier-coated paper substrate is covered on its inner, coated side with an inside polymer multilayer portion 17.

The inside polymer multilayer portion has three layers of different polymers, i.e. an innermost heat sealable layer 13 comprising in this example a blend of 70 weight-% mLLDPE and 30 weight-% LDPE, a tie layer 17a, applied onto the metallized surface of the barrier-coated paper at an amount of about 6 g/m², e.g. of ethylene acrylic acid copolymer (EAA), to promote adhesion of the inside multilayer layer portion to the barrier-coated paper substrate, and an intermediate load-bearing and load-distributing layer 17b comprising a linear low-density polyethylene, LLDPE having a melt flow ratio, MFR, from 4 to 20 g/10 min (190 °C/ 2.16 kg) and a melting temperature above 115 °C , applied between the tie layer and the innermost heat sealable layer 14. The three layers 17a, 17b and 14, were applied together in one single, melt coextrusion coating operation.

In a preferred embodiment of this laminate structure, the intermediate load-bearing and load-distributing layer 17b is a blend comprises a polymer blend including from 50 to 95 weight-% of the LLDPE having a melt flow ratio from 4 to 20 g/10 min (190 °C/ 2.16 kg) and a melting temperature above 115 °C and from 5 to 50 weight-% of an HDPE or MDPE. Such configuration of the inside polymer multilayer portion 17 provides for a surprising improvement of both a of strong load-bearing effect and high durability and robustness upon fold forming of the laminated packaging material.

In a further, preferred embodiment, the bulk layer 11 is laminated to the uncoated side of the thin, barrier-coated paper substrate 15, by an intermediate bonding layer 16b of an aqueous adhesive composition of a starch-based adhesive at from 2-7 g/m², solid matter.

In yet a further embodiment, combinable with the previous embodiment, the outer liquid tight and heat sealable layer 12 is applied in the form of an aqueous dispersion coating of an acrylic-functional or acrylic acid-functional, polyolefin-based polymer, at a dry matter content from 6 to 8 g/m².

Fig. 2 shows a laminated packaging material 20a comprising the same and corresponding bulk layer 21 of paperboard, outer liquid tight and heat sealable layer 22, barrier-coated paper substrate 25, and intermediate bonding layer 26, as described in Fig. 1, with the only differences in how the inside polymer multilayer portion 27 is applied onto the barrier-coated paper.

The inside polymer multilayer portion 27 has thus the corresponding three principal layers of different polymers, i.e. an innermost heat sealable layer 24 comprising a blend of 70 weight-% mLLDPE and 30 weight-% LDPE, a tie or adhesive layer 27a, applied onto the metallized surface of the barrier-coated paper at an amount of about 6 g/m², i.e. of ethylene acrylic acid copolymer, EAA, (ethylene methacrylic acid copolymer, EMAA, may be a well functioning alternative in this embodiment), to promote adhesion of the inside multilayer layer portion to the barrier-coated paper substrate, and an intermediate load-bearing and load-distributing layer 27c comprising a linear low-density polyethylene, LLDPE having a melt flow ratio, MFR, from 4 to 20 g/10 min (190 °C/ 2.16 kg) and a melting temperature above 115 °C, applied between the tie layer and the innermost heat sealable layer 24. The three layers 27a, 27c and 24, are however applied in two steps of melt extrusion coating, i.e. the first step comprising the tie layer 27a and the load-bearing and load-distributing layer 27c applied by co-extrusion coating in a first extrusion coating lamination station, and the second step comprising extrusion coating the innermost heat sealable layer 24 in a second extrusion coating lamination station. This means that the molten extrusion-coated polymer film solidifies by the contact with the substrate web on one side and with the cooling roller on the other side, in a lamination roller nip, after each extrusion-coating step, such that at least the inner surface of the intermediate, load-bearing and load-distributing layer 27c is solidified at the surface ad interface 28 towards and before the innermost layer 24 is applied.

In a further embodiment, not shown, a laminated packaging material 20c is provided by the only difference, from what is described in Fig. 2 above, residing in how the inside polymer multilayer portion 27 is applied onto the barrier-coated paper 25. The inside polymer multilayer portion 27 has also in this embodiment three principal layers of different polymers, i.e. an innermost heat sealable layer 24b comprising a blend of 70 weight-% mLLDPE and 30 weight-% LDPE, a tie layer 27a, applied onto the metallized surface of the barrier-coated paper at an amount of about 6 g/m², i.e. of ethylene acrylic acid copolymer, EAA, (ethylene methacrylic acid copolymer, EMAA, may be a well functioning alternative in this embodiment), to promote adhesion of the inside multilayer layer portion to the barrier-coated paper substrate, and an intermediate load-bearing and load-distributing layer 27b comprising a linear low-density polyethylene, LLDPE having a melt flow ratio, MFR, from 4 to 20 g/10 min (190 °C/ 2.16 kg) and a melting temperature above 115 °C, applied between the tie layer and the innermost heat sealable layer 24b. The three layers 27a, 27b and 24b, were however applied as two melt coextrusion coatings, i.e. in a first co-extrusion coating step applying the tie layer 27a, the load-bearing and load-distributing layer 27b, and a first part thickness of the innermost heat sealable layer 24b, and in a second extrusion-coating step applying the second, remaining part thickness of the innermost heat sealable layer 24b. The first part thickness was co-extruded at about 5 g/m² to balance the intermediate load-bearing and load-distributing layer 27b also on its other, inner side and to provide symmetry in that extrusion coating step together with the EAA tie layer 27a, while the remaining part thickness was applied at about 10 g/m². The two steps of extrusion coating were performed in separate lamination stations with intermediate cooling and solidification of the first applied, melt coated polymer layers at the interface 28.

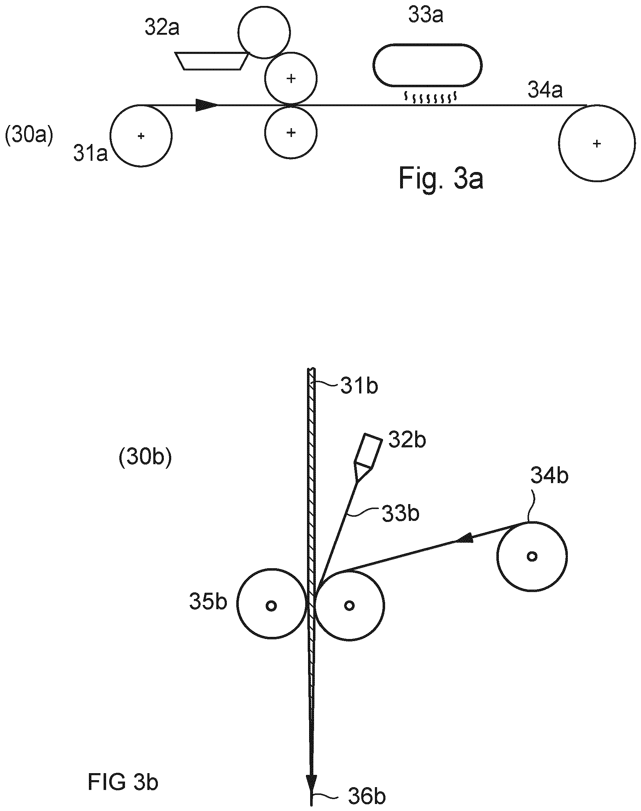

In Fig. 3a, an embodiment of a principal process of aqueous dispersion coating 30a is shown, which may be used for applying a first gas barrier layer 15c from an aqueous oxygen gas barrier composition onto a paper substrate 15a, or for applying an optional base coating 15b beneath the first gas barrier layer 15c (however requiring different equipment and settings).

Alternatively, such an aqueous dispersion coating process may be used for applying an aqueous adhesive composition for wet laminating of two webs together, of which at least one web has a fibrous cellulose surface. The roller application of the aqueous composition may differ depending on the purpose, i.e. the set up of the rollers and the application method may be different for a coating roller station, than for an adhesive application roller station. Thus, for the application of an aqueous adhesive composition as described in connection with an embodiment of the present invention, there will be no drying step needed.

A web of a paper substrate 31a; 15a; 25a, (or an optionally base-coated paper substrate 15ab; 25ab) is thus forwarded to a dispersion coating station 32a, where an aqueous dispersion composition is applied by means of roller application onto the top surface of the substrate 31a. The aqueous dispersion composition may have an aqueous content of from 80 to 99 weight-%, in the case of gas barrier compositions, thus there may be be a lot of water on the wet coated substrate that needs to be dried by heat, and evaporated off, to form a continuous, homogenous coating, having an even quality with respect to barrier properties and surface properties, i.e. evenness and wettability. The drying is carried out by a hot air dryer 33a, which also allows the moisture to evaporate and be ventilated away from the surface of the substrate. The substrate temperature as it travels through the dryer, may be kept constant at a temperature of below 100 °C, such as below 90 °C, such as from 70 to 90 °C, in order to avoid defects in the coating. Drying may be partly assisted by irradiation heat from infrared IR-lamps, in combination with hot air convection drying.

For the coating of a base coating, however, the aqueous content may be much lower, such as in the case of a mineral-filled coating, and then also the extent of necessary drying will be lower.

A resulting web of a thus base-coated and dried paper substrate 34a may be smoothened by passing through at least one calender nip (not shown). For some embodiments the base-coated paper substrate may be smoothened and densified by passage through a super-calender of multiple high-pressure nips, in particular to produce a paper substrate of high density above 800, such as above 900 kg/m3. The finished, base-coated paper substrate may then be forwarded and further wound onto a reel for intermediate storage and later further subjected to gas barrier coating operations. Further coating operations may be further dispersion coating operations of a gas barrier composition 15c to provide a barrier-coated cellulose-based substrate, as described above, and/or vapour deposition coating of a barrier deposition coating 15d as described below, i.e. in a PVD coating process.

Fig. 3b shows a first lamination process step in the manufacturing of the packaging laminate 10, 20, as the bulk layer 31b; 11, 21 is laminated to the barrier-coated substrate material web 34b (34a from fig. 3a); 15, 25.

As explained in connection to Fig. 1, and 2, the bulk layer paperboard 11, 21 may be laminated to the barrier-coated substrate material 15; 25 by means of melt extrusion lamination as shown in this figure, or by means of wet, cold dispersion adhesive lamination, the latter method however not shown. Thus, a molten polymer curtain 33b of e.g. LDPE is fed from a heated extruder and extrusion die 32b into a nip of lamination rollers 35b, as the two webs 31a and 34b are also forwarded to the same lamination nip and joined to each other by the intermediate, extruded bonding layer 33b of LDPE. The three layers are thus pressed together and joined at the nip 35b, which is formed between a press roller and a chill roller, thus cooling the laminated material to properly solidify the extruded bonding layer of LDPE. The resulting laminated material 36b is forwarded to be wound up on a reel for intermediate storage, or directly forwarded to subsequent lamination operations.

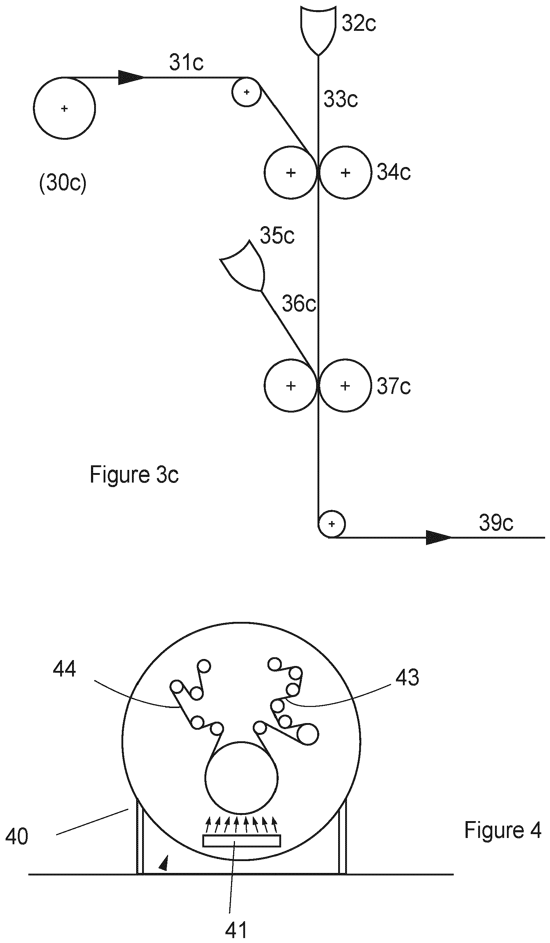

Fig. 3c shows a process 30c for the remaining and final lamination steps in the manufacturing of the packaging laminate 10, 20, of Fig. 1 and 2, respectively, after that the bulk layer 11, 21 has first been laminated to the barrier-coated cellulose-based substrate 15, 25. The resulting "pre-laminate" may have been laminated either by wet lamination as mentioned in connection to Fig. 3a above, or by polymer melt extrusion lamination in a lamination roller nip, as described in Fig. 3b.

As explained in connection to Fig. 1, the bulk layer paperboard 11 may thus be laminated to the barrier-coated paper substrate 15 by means of wet, cold dispersion adhesive lamination, or by means of melt extrusion lamination of an intermediate bonding layer 16. An aqueous adhesive composition may be applied by means of a same or similar method as described in connection to Fig. 3a, however not requiring drying, or very little heating.

The resulting bulk, paperboard-to-barrier pre-laminated web 31c is then forwarded from an intermediate storage reel, or directly from the lamination station for laminating the paper pre-laminated web. The barrier side of the pre-laminated bulk-barrier web 11-15; 21-15, i.e. its inner side, is joined at a cooled roller nip 34c to a molten polymer curtain 33c of the inside multilayer portion polymers 17; 27, being co-extruded together from an extruder feedblock and die 32c, i.e. as co-extruded molten layers of an EAA tie layer 17a; 27a, the load-bearing and load-distributing layer 17b; 27b comprising the LLDPE, and the innermost heat sealable layer 14; 24. Thus, the innermost heat sealable layer 14; 24; is coextrusion coated together with the other layers of the inside polymer mutilayer portion 17; 27, onto the inner side of the pre-laminate web in this illustrated embodiment. Subsequently, the paperboard pre-laminated web, now having the inside polymer multilayer portion applied on its inside, is melt extrusion coated on its outer, non-laminated, printed side of the bulk layer, i.e. the outside of the laminate, with the outermost layer 12; 22 of LDPE being extruded from an extruder feedblock and die 35c, while passing a further lamination nip 37c, where a molten polymer curtain 36c is joined and coated onto the other, outer side of the pre-laminate, i.e. on the printed side of the laminate, to form the finished laminated packaging material 39c, which is finally wound onto a storage reel, not shown.

These two coextrusion steps at lamination roller nips 34c and 37c, may alternatively be performed as two consecutive steps in the opposite order.

According to a further embodiment, combinable with any one of the previous embodiments, the inside polymer multilayer portion is applied in two co-extrusion coating steps, thus adding a further polymer extruder and a further lamination roller nip, for the melt extrusion coating of the inside polymer multilayer portion 27. The innermost layer 24 may for example be separately extrusion coated onto a previously applied, solidified co-extrusion coating of the inside polymer layers 27a (tie layer) and 27b (load-bearing and load-distributing layer).

Fig. 4 is a diagrammatic view of an example of a plant 40 for physical vapour deposition, PVD, of e.g. an aluminium metal coating, onto a web substrate of the invention. The base-coated and first gas-barrier coated, i.e. dispersion-coated paper substrate 43 is subjected, on its coated side, to continuous evaporation deposition 40, of evaporised aluminium, to form a metallised layer of aluminium or, alternatively to a mixture of oxygen with aluminium vapour, to form a deposited coating of aluminium oxide. The coating is provided at a thickness from 5 to 100 nm, preferably from 10 to 50 nm, to form the barrier-coated paper substrate 44; 15 of the invention, as employed in the laminated packaging material of Figures 1 and 2. The aluminium vapour is formed from ion bombardment of an evaporation source of a solid piece of aluminium 41. For the coating of aluminium oxide, also some oxygen gas may be injected into the plasma chamber via inlet ports.

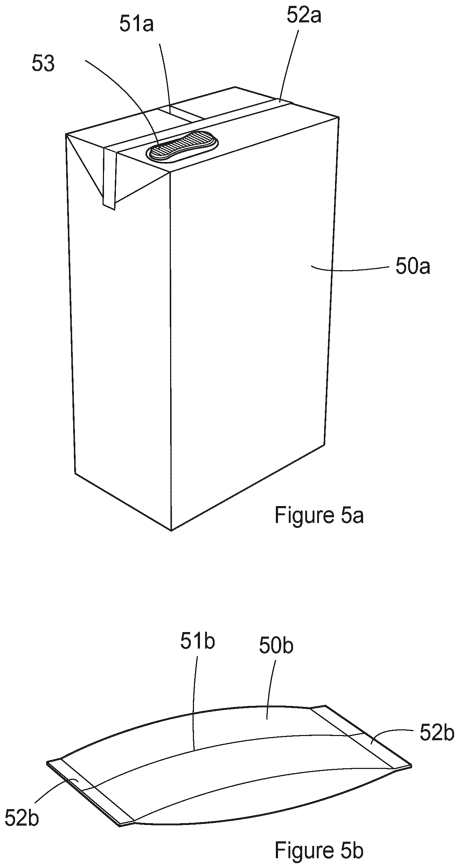

Fig. 5a shows an example of a packaging container 50a produced from the packaging laminate of the present invention. The packaging container is particularly suitable for beverages, sauces, soups or the like. Typically, such a package has a volume of about 100 to 1000 ml. It may be of any configuration, but is preferably brick-shaped, having longitudinal and transversal seals 51a and 52a, respectively, and optionally an opening device 53. In another embodiment, not shown, the packaging container may be shaped as a wedge. To obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the only partly folded packaging container is still easy to handle and dimensionally stable enough to put on a shelf in the food store or on any flat surface.

Fig. 5b shows an alternative example of a packaging container 50b produced from an alternative packaging laminate of the invention. The alternative packaging laminate is thinner by having a thinner paper bulk layer, and thus it is not dimensionally stable enough to form a parallelepipedal or wedge-shaped packaging container, and is not fold formed after transversal sealing 52b. The packaging container will remain a pillow-shaped pouch-like container and be distributed and sold in this form.

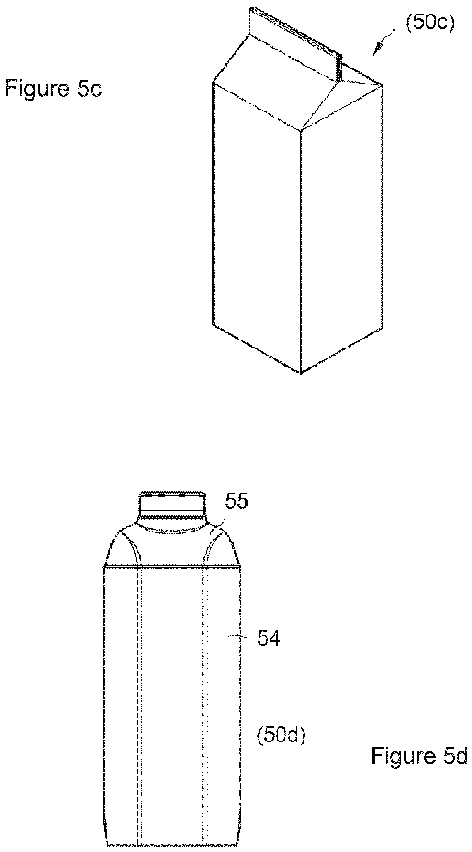

Fig. 5c shows a gable top package 50c, which is fold-formed from a pre-cut sheet or blank, from the laminated packaging material comprising a bulk layer of paperboard and the barrier-coated paper substrate of the invention. Also flat top packages may be formed from similar blanks of material.

Fig. 5d shows a bottle-like package 50d, which is a combination of a sleeve 54 formed from a pre-cut blank of the laminated packaging material, and a top 55, which is formed by injection moulding plastics in combination with an opening device such as a screw cork or the like. This type of package is for example marketed under the trade name of Tetra Top^{®}. Those particular packages are formed by attaching the moulded top 55 with an opening device attached in a closed position, to a tubular sleeve 54 of the laminated packaging material, sterilizing the thus formed bottle-top capsule, filling it with the food product and finally fold-forming the bottom of the package and sealing it.

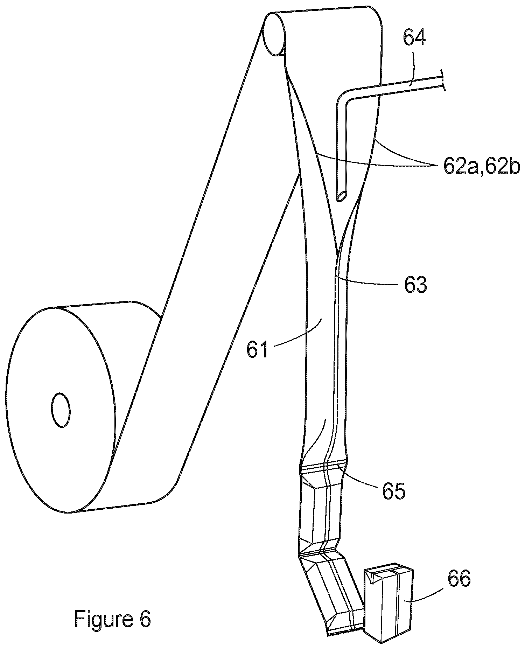

Fig. 6 shows the principle as described in the introduction of the present application, i.e. a web of packaging material is formed into a tube 61 by overlapping the longitudinal edges 62a, 62b of the web and heat sealing them to one another, to thus form an overlap joint 63. The tube is continuously filled 64 with the liquid food product to be filled and is divided into individual, filled packages by repeated, double transversal seals 65 of the tube at a pre-determined distance from one another below the level of the filled contents in the tube. The packages 66 are separated by cutting between the double transversal seals (top seal and bottom seal) and are finally shaped into the desired geometric configuration by fold formation along prepared crease lines in the material.

The following advantages can accordingly be achieved by employing an inside polymer multilayer portion comprising a load-bearing and load-distributing layer comprising linear low-density polyethylene, LLDPE having a melt flow ratio, MFR, from 4 to 20 g/10 min (190 °C/ 2.16 kg) and a melting temperature above 115 °C in a laminated packaging material comprising a barrier-coated cellulose-based substrates for replacing aluminium foils and barrier-coated polymer films:
A more load bearing inside polymer multilayer portion provides robustness in laminated carton-based packaging materials having barrier-coated cellulose-based sheets or films as substrates. A more robust inside multilayer portion is in particular needed when using less advanced paper substrates, which are less flexible and more prone to cause cracks in the thin barrier coatings, as cellulose fibre material is breaking upon folding of the paper.

The structure of the laminated packaging material according to the invention has proven to be a good, cost-effective solution that maintains OTR properties well also after fold-forming the material into a package. Moreover, the inside polymer multilayer portion as such can remain intact, without the formation of thinnings or other defects of the polymer layers, thus resisting the folding forces such that they better protect the sensitive contents in a filled packaging container. As the inside multilayer portion remains intact, the thin barrier coatings may also stay unimpaired to perform to their intended purpose.

In this way, the improved laminated packaging material can resist fold-forming into packaging containers to better protect oxygen-sensitive, liquid, semi-liquid and viscous food products during long term storage with maintained asepticity.

In addition, such a laminated packaging material, comprising a cellulose-based barrier coating structure instead of an aluminium foil or thick polymer barrier materials, also exhibits better repulpability and recyclability after use, to fulfil the needs of future environmentally sustainable laminated packaging materials.

Furthermore, improved heat sealable such laminated packaging materials are provided, while not containing aluminium foil but still providing for good gas barrier and other barrier properties, and being suitable for long-term, aseptic packaging at reasonable cost and complexity of source materials and manufacturing processes.

In the preferred embodiments, the integrity of the inside polymer multilayer portion is also generally further enhanced, within the full, in-the plane extension of the laminated packaging material.

As a final remark, the invention is not limited by the embodiments shown and described above but may be varied within the scope of the claims.

## Claims

1. Laminated packaging material (10; 20) for packaging of oxygen-sensitive food products, such as liquid, semi-liquid or viscous food products, comprising as layers of a sequence
a first outermost protective material layer or coating (12; 22), to be directed towards the outside of a packaging container formed from the laminated packaging material,
a bulk layer (11; 21) of paper or paperboard or other cellulose-based material,
a barrier-coated cellulose-based substrate (15; 25), the barrier-coated cellulose-based substrate comprising at least one gas barrier layer (15c; 25c),
the laminated packaging material further comprising
an inside polymer multilayer portion (17; 27) comprising at least
a second innermost liquid tight, heat sealable material layer (14; 24; 24b) to be in direct contact with a product to be filled into a packaging container made from the packaging material,
the second innermost liquid tight, heat sealable material layer comprising a polyethylene polymer having a low density,
such as selected from the group consisting of low density polyethylene, LDPE, linear low density polyethylene, LLDPE, and blends thereof,
wherein the layers of the inside polymer multilayer portion are applied by means of extrusion coating onto the inner side of the barrier-coated cellulose-based substrate and comprise a load-bearing and load-distributing layer (17b; 27b; 27c) comprising a linear low-density polyethylene, LLDPE having a melt flow ratio, MFR, from 4 to 20 g/10 min (190 °C/ 2.16 kg) and a melting temperature above 115 °C.

2. Laminated packaging material (10; 20) as claimed in claim 1, wherein the load-bearing layer (17b; 27c; 27b) is adjacent and in direct contact with the second innermost liquid tight, heat sealable material layer, and wherein the second innermost liquid tight, heat sealable material layer (14; 24; 24b) has a major melting point peak, Tm, from 88 to 110 °C.

3. Laminated packaging material (10; 20) as claimed in any one of claims 1 and 2, wherein the second innermost liquid tight, heat sealable material layer (14; 24; 24b) comprises a blend of from 50 to 90 weight-% of a linear low density polyethylene catalysed by a metallocene-type catalyst, m-LLDPE, with from 10 to 50 weight-% of a low density polyethylene, LDPE.

4. Laminated packaging material (10; 20) as claimed in any one of the preceding claims, wherein the inside polymer multilayer portion (17; 27) further comprises a tie layer (17a; 27a) comprising an adhesive polymer adjacent and in contact with the barrier-coated, inner side of the cellulose-based substrate.

5. Laminated packaging material (10; 20) as claimed in any one of the preceding claims, wherein the first outermost protective material layer or coating (12; 22) is a polethylene based polymer, applied as an aqueous dispersion at an amount of from 1 to 8, such as from 1 to 6 g/m², dry weight.

6. Laminated packaging material (10; 20) as claimed in any one of the preceding claims, wherein the barrier-coated cellulose-based substrate (15; 25) is laminated to the bulk layer (11; 21) by an intermediate bonding layer (16; 26) from a polyethylene-based polymer and is applied at an amount from 12 to 20 g/m², dry weight.

7. Laminated packaging material (10; 20) as claimed in any one of the preceding claims, wherein the barrier-coated cellulose-based substrate (15; 25) is laminated to the bulk layer (11; 21) by an intermediate bonding layer (16b; 26b) from a composition comprising a water-dispersible binder, such as selected from the group consisting of acrylic polymers and copolymers, polymers and copolymers of vinyl acetate and/or vinyl alcohol, biobased binders, such as starch-based binders, binders based on cellulose or cellulose derivatives and binders based on other polysaccharide derivatives, applied, at an amount of from 1 to 6 g/m², dry weight.

8. Laminated packaging material (10; 20) as claimed in any one of the preceding claims, wherein the load-bearing and load-distributing layer (17b; 27c; 27b) comprises a polymer blend including from 50 to 95 weight-% of the LLDPE having a melt flow ratio from 4 to 20 g/10 min (190 °C/ 2.16 kg) and a melting temperature above 115 °C and from 5 to 50 weight-% of an HDPE or MDPE..

9. Laminated packaging material (10; 20) as claimed in any one of the preceding claims, wherein the load-bearing and load-distributing layer (17b; 27c; 27b) has a surface weight from 8 to 25 g/m², such as from 10 to 25 g/m², such as from 12 to 25 g/m², such as from 15 to 25, such as from 15 to 22 g/m².

10. Laminated packaging material (10; 20) as claimed in any one of the preceding claims, wherein the inside polymer multilayer portion (17; 27) is applied in at least two consecutive steps as separate layers, by means of melt extrusion coating, with at least partial solidification of a prior, melt-extrusion applied layer before a next melt-extrusion layer is applied onto the prior layer.

11. Laminated packaging material (10; 20) as claimed in any one of the preceding claims, wherein the at least one gas barrier layer (15c; 25c) is applied by means of aqueous dispersion or solution coating at a grammage from 0.5 to 4 g/m², such as from 0.5 to 3 g/m², such as from 0.5 to 2 g/m² dry weight.

12. Laminated packaging material (10; 20) as claimed any one of the preceding claims, wherein the at least one gas barrier layer (15c; 25c), comprises a polymer selected from the group consisting of vinyl alcohol polymers and copolymers, such as from the group consisting of polyvinyl alcohol, PVOH, and ethylene vinyl alcohol, EVOH, starch and starch derivatives, xylan, xylan derivatives, nanofibrillar cellulose/ microfibrillar cellulose, NFC/ MFC, and blends of two or more thereof.

13. Laminated packaging material (10; 20) as claimed in any one of claims 11 and 12, wherein the at least one gas barrier layer (15c; 25c) is a first gas barrier layer and is applied by means of aqueous dispersion or solution coating, and wherein the laminated packaging material comprises at least one further gas barrier coating (15d; 25d), applied onto the at least one, or first, gas barrier layer, the at least one further gas barrier coating being a barrier deposition coating (15d; 25d), applied by means of a vapour deposition method, the barrier-coated cellulose substrate (15; 25) thus providing gas barrier properties as well as water vapour barrier properties in the laminated packaging material.

14. Laminated packaging material (10; 20) as claimed in claim 13, wherein the barrier deposition coating (15d; 25d) is a vapour deposition coating of a material selected from metals, metal oxides, inorganic oxides and carbon coatings.

15. Laminated packaging material (10; 20) as claimed in any one of claims 13 and 14, wherein the barrier deposition coating (15d; 25d) is an aluminium metallisation coating.

16. Laminated packaging material (10; 20) as claimed in any one of the preceding claims, wherein the barrier-coated cellulose-based substrate (15; 25) is pre-coated with a base-layer (15b; 25b) beneath the at least one gas barrier layer or first gas barrier layer (15c; 25c).

17. Laminated packaging material (10; 20) as claimed in any one of the preseding claims, wherein the barrier-coated cellulose-based substrate (15; 25) has a density from 900 to 1400 kg/m³.

18. Laminated packaging material (10; 20) as claimed in any one of the preseding claims, wherein the cellulose-based substrate (15a; 25a) of the barrier-coated cellulose-based substrate is an impregnated paper.

19. Laminated packaging material (10; 20) as claimed in any one of the preseding claims, wherein the cellulose-based substrate (15a; 25a) of the barrier-coated cellulose-based substrate has a strain at break in the machine direction in the range of 3.5% - 9.0%, such as 4.0% - 8.0%, as measured according to ISO 1924-3:2005.

20. Method (30b, 30c) for manufacturing of a laminated packaging material (10; 20) as claimed in any one of claims 1-19, comprising the steps of
- laminating (30b) the barrier-coated cellulose-based substrate (34b) to the bulk layer (31b) of paper or paperboard or other cellulose-based material,
- melt extrusion coating (30c) the first outermost protective material layer or coating (36c), to be directed towards the outside of a packaging container formed from the laminated packaging material, onto the outer side of the bulk layer,
- extrusion coating (33c) the inside polymer multilayer portion (17; 27) comprising a second innermost liquid tight, heat sealable material layer (14; 24; 24b) to be in direct contact with a product to be filled into a packaging container made from the packaging material, and an interjacent load-bearing and load-distributing layer (17b; 27c; 27b) comprising a linear low-density polyethylene, LLDPE having a melt flow rate from 4 to 20 g/10 min (190 °C/ 2.16 kg) and a melting temperature above 115 °C onto the inner side of the barrier-coated cellulose-based substrate,
the second innermost liquid tight, heat sealable material layer comprising a polyethylene polymer having a low density, such as selected from the group consisting of low density polyethylene, LDPE, linear low density polyethylene, LLDPE, and blends thereof.

21. Method as defined in claim 20, wherein the load-bearing and load-distributing layer (17b; 27c; 27b) comprises a polymer blend including from 50 to 95 weight-% of the LLDPE having a melt flow ratio from 4 to 20 g/10 min (190 °C/ 2.16 kg) and a melting temperature above 115 °C and from 5 to 50 weight-% of an HDPE or MDPE.

22. Method as defined in any one of claims 20 and 21, wherein the inside polymer multilayer portion (17; 27) is applied in at least two consecutive steps as separate layers, by means of melt extrusion coating, with at least partial solidification of the prior, melt-extrusion coated layer before the next melt-extrusion layer is coated onto the prior layer.

23. Packaging container (50a; 50b; 50c; 50d) comprising the heat sealable laminated packaging material (10; 20) as defined in any one of claims 1-19.
